# EUROPEAN PATENT SPECIFICATION

(11) **EP 1 408 665 B1**
(45) Date of publication and mention of the grant of the patent: **06.09.2017**
(21) Application number: 03023128.6
(22) Date of filing: 10.10.2003
(51) Int. Cl.: H04L 27/26

(54) **Detection of the position of pilot symbols in a multicarrier signal**
Erfassung der Lage von Pilotsymbolen in einem Mehrträgersignal
Détection de symboles pilotes dans un signal multiporteuse

(30) Priority: 10.10.2002 JP 2002297298
(43) Date of publication of application: 14.04.2004
(73) Proprietor: Panasonic Intellectual Property Management Co., Ltd., Osaka-shi, Osaka 540-6207 (JP)
(72) Inventor: Hayshi, Daisuke, Neyagawa-shi, Osaka (JP); Yagi, Tetsuya, Katano-shi, Osaka (JP)
(74) Representative: Grünecker Patent- und Rechtsanwälte PartG mbB

(56) References cited:
- EP-A2- 0 898 381
- EP-A2- 1 143 678
- WO-A2-98/19410

## Description

### BACKGROUND OF THE INVENTION

### (1) Field of the Invention

The present invention relates to an OFDM equalization apparatus, and in particular to a technique for equalizing an OFDM signal used in digital terrestrial broadcasting.

### (2) Description of the Prior Art

Currently, advancements towards digitalization of terrestrial television are taking place around the world, with the aim of realizing improved frequency usage efficiency, multichannelization, high picture quality and high sound quality in terrestrial television and radio broadcasting. In fact, terrestrial digital broadcasting is about to commence in Japan.

In Japanese terrestrial digital broadcasting, broadcasts are transmitted using OFDMsignals. Generally, an OFDM signal is a signal obtained by modulating each of a multiplicity of mutually orthogonal carriers with digital data, and multiplexing the modulated waves.

The standard for OFDM signals used in Japanese terrestrial digital broadcasting (hereinafter simply referred to as "terrestrial digital broadcast signal(s)") is defined in Non-patent document 1. The following describes parts of this standard that are relevant to the subject of the present invention.

A terrestrial digital broadcast signal is composed of 13 OFDM segments (hereinafter simply called "segment(s)") in the case of a television broadcast, and one or three segments in the case of a radio broadcast. Each segment is a bundle of carriers, and has a bandwidth of approximately 430 kHz. The number of carriers is predetermined according to the transmission mode, and is, for example, 108 in mode 1. There are two types of carriers : control information carriers and data carriers. A control information carrier is modulated using a known modulation method. A data carrier transmits information of the broadcast itself, and is modulated using the modulation method indicated by the control information.

A segment in which data carriers are modulated with QPSK (Quarternary Phase Shrift Modulation), 16 QAM (Quadrature Amplitude Modulation), or 64 QAM is called a synchronous modulation portion, and a segment in which data carriers are modulated with DQPSK (Differential QPSK) is called a differential modulation portion.

Each carrier is modulated with an individual complex symbol (a so-called IQ symbol that represents the orthogonal component of the information signal as a real part and an imaginary part) each symbol period, and the modulated carriers are transmitted multiplexed as one OFDM signal. Two hundred and four OFDM symbols make up one transmission frame (hereinafter simply referred to as a "frame").

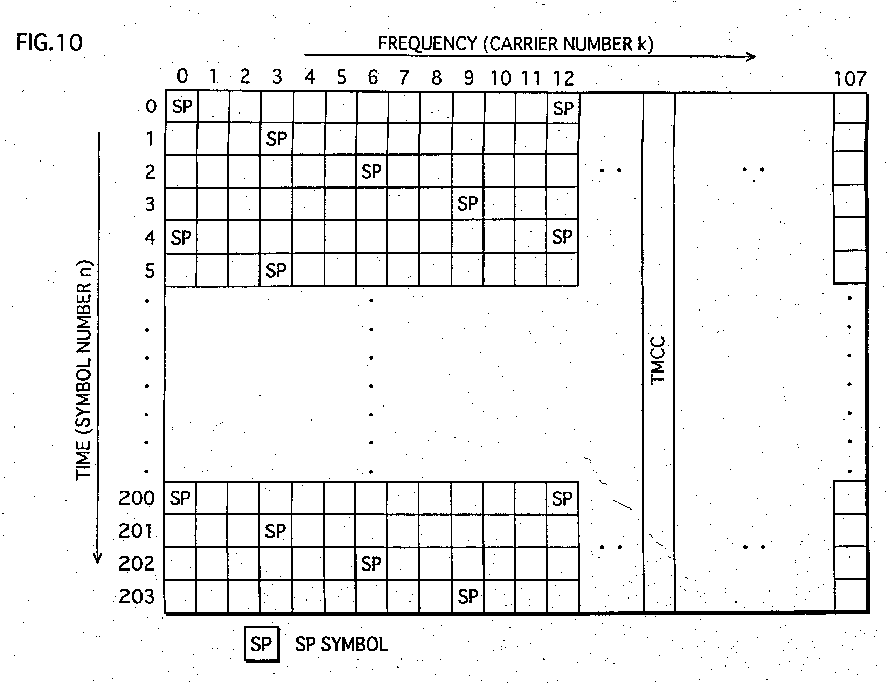

FIG. 10 shows an example of the configuration of a frame in a synchronous modulation portion. In FIG. 10, carriers are shown arranged from left to right in ascending order of frequency, and from top to bottom in temporal order of OFDM symbols. Here, the carrier number k is 0 to 107 in the ascending order of frequency, and the symbol number n is 0 to 203 in the temporal order within the frame.

One complex symbol c(n,k) for modulating the carrier k in the period of symbol number n is positioned in each cell where a carrier and an OFDM symbol intersect. Consequently, FIG. 10 also shows the arrangement of carrier frequency order and temporal order of the complex symbols c(n,k).

SP (scattered pilot) symbols are transmitted in the synchronous modulation portion. An SP symbol is a pilot symbol that indicates a reference value used in signal equalization. As shown in FIG. 10, an SP symbol is transmitted once every four symbol periods in temporal order by one in three carriers. This means that in terms of frequency order an SP symbol is transmitted by one in twelve carriers in every symbol period.

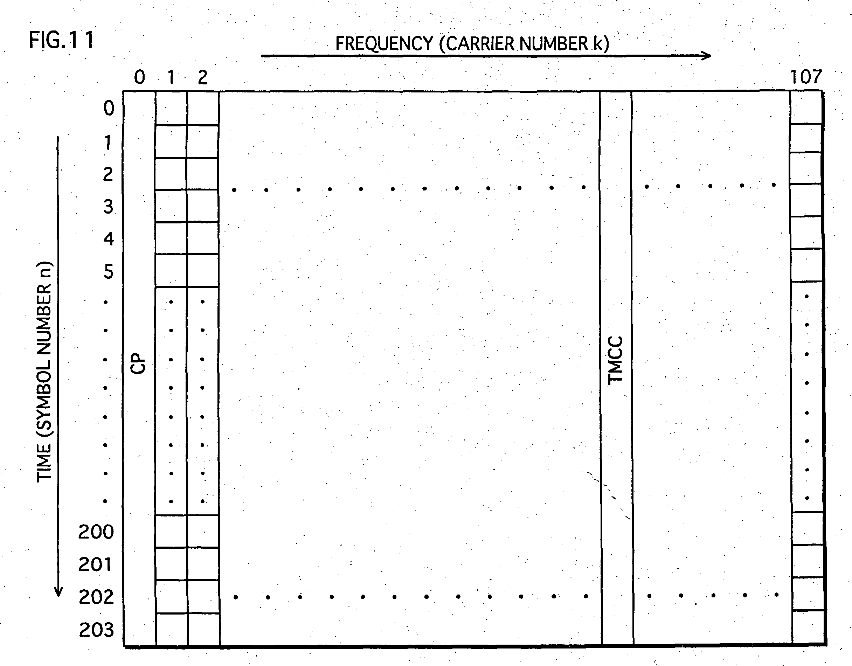

FIG. 11 shows an example of the configuration in a frame of a differential modulation portion, using the same notation as FIG. 10. SP symbols are not transmitted in the differential modulation portion.

A TMCC (transmission and multiplexing configuration control) signal is transmitted using a predetermined carrier in both the synchronous modulation portion and the differential modulation portion. The TMCC signal includes synchronizing symbols in symbol numbers 1 to 16, segment type identification symbols in symbol numbers 17 to 19, and TMCC information symbols in symbol numbers 20 to 121. The synchronizing symbols indicate synchronization timing of the frame. The TMCC information symbols can be used to identify whether the segment is a synchronous modulation portion or a differential modulation portion.

Conventional OFDM signal reception apparatuses that receive such terrestrial digital broadcast signals have been disclosed in, for example, Patent Document 1.

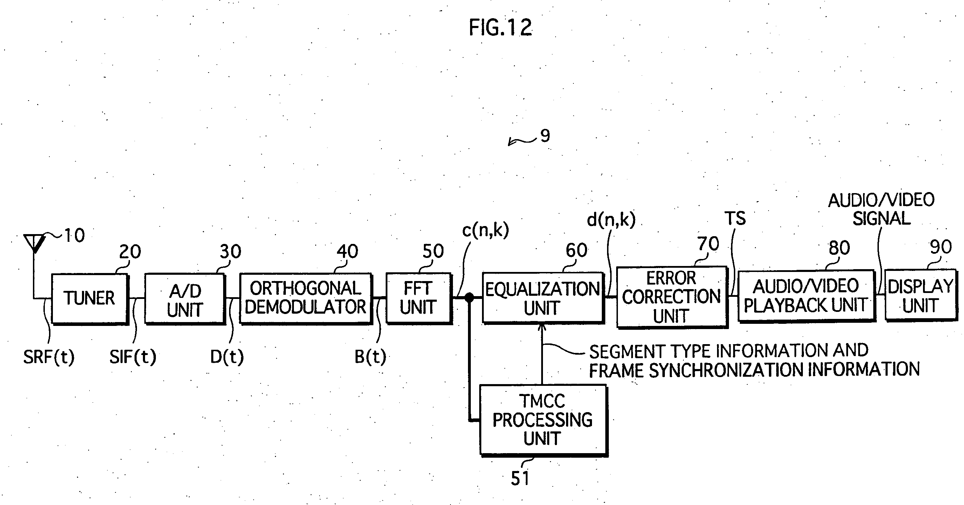

FIG. 12 is a functional block diagram showing the structure of a terrestrial digital broadcast reception apparatus 9 that includes an audio/video playback unit 80 and a display unit 90 in addition to the main components of the OFDM signal reception apparatus shown in Patent Document 1.

In the terrestrial digital broadcast reception apparatus 9, an antenna 10 receives an RF band OFDM signal SRF(t), a tuner 20 converts the frequency of the signal SRF(t) to an IF band OFDM signal SIF(t) with use of a signal generated by a local oscillator inside of the tuner 20, an A/D unit 30 samples the signal SIF(T) and outputs data D(t), and an orthogonal demodulation unit 40 outputs a baseband OFDM signal B(t) based on the data D(t).

The signal B(t) represents a series of complex values that represents the orthogonal components included in a time domain OFDM signal with a real part and an imaginary part. For ease of comprehension, the sections throughwhich the complex signal passes are indicated by a thick line in FIG. 12.

An FFT unit 50 converts by Fourier transformation the signal B(t) obtained in the valid symbol period of the symbol number n to calculate, for each carrier, a complex symbol c(n,k) represented by carrier k (in other words, a complex symbol c(n, k) that is the modulated carrier k) in that period.

The TMCC processing unit 51 establishes frame synchronization and identifies segment type by referring to the complex symbol c(n,k0) calculated for the carrier k0 that transmits a TMCC signal. The TMCC processing unit 51 then notifies an equalization unit 60 of frame synchronizing information indicating the established frame synchronous timing, and segment type information vindicating the identified segment type.

When the notified segment type information indicates a synchrorious modulation portion, the equalization unit 60 specifies the position of the SP symbols based on the notified frame synchronization information, and equalizes the phase and amplitude of each of the complex symbols with use of the complex symbols that are in the specif iedposition.

An error correction unit 70 corrects errors in the equalized complex symbols d(n,k) and converts the corrected complex symbols d(n,k) to a transport stream TS. The audio/video playback unit 80 decodes the transport stream to obtain an audio/video signal, and outputs video and audio via the display unit 90.

As described, the equalization unit 60 in the conventional terrestrial digital broadcast reception apparatus commences equalizing the complex symbols only once it has been notified of the segment type information and the frame synchronization information by the TMCC processing unit 51.

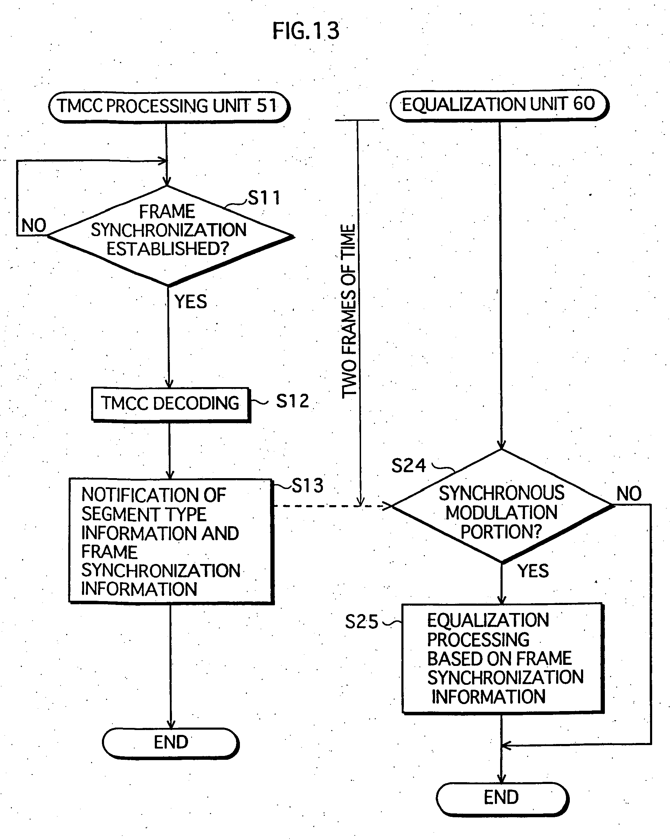

FIG. 13 is a flowchart showing details of conventional equalization processing.

Generally, in conventional processing frame synchronization is established by detecting synchronizing symbols of two frames as described. Consequently, an average of 1.5 frames and a maximum of 2 frames of time passes while, after the FFT unit 50 commences providing the complex symbols, the TMCC processing unit 51 establishes synchronization (S11), decodes the TMCC information symbols (S12), and provides the frame synchronization information and the segment type information to the equalization unit 60 (S13). After the time has passed, the equalization unit 60 refers to the segment type information notified by the TMCC processing unit 51, and if the segment is a synchronous modulation portion (S24: YES), commences equalization (S25).

Two frames' worth of time is approximately 0.5 seconds, defending on the transmission mode. This gives rise to a problem that a considerable amount of time is required to obtain stable audio and video with conventional equalization processing.

This problem occurs not only in Japanese terrestrial digital broadcasting, but generally occurs in digital broadcasts, such as in European terrestrial digital broadcasting, that are transmitted by an OFDM signal having a similar configuration to that described, and received according to a procedure of specifying the position of the SP symbols after establishing synchronization and then commencing equalization processing.

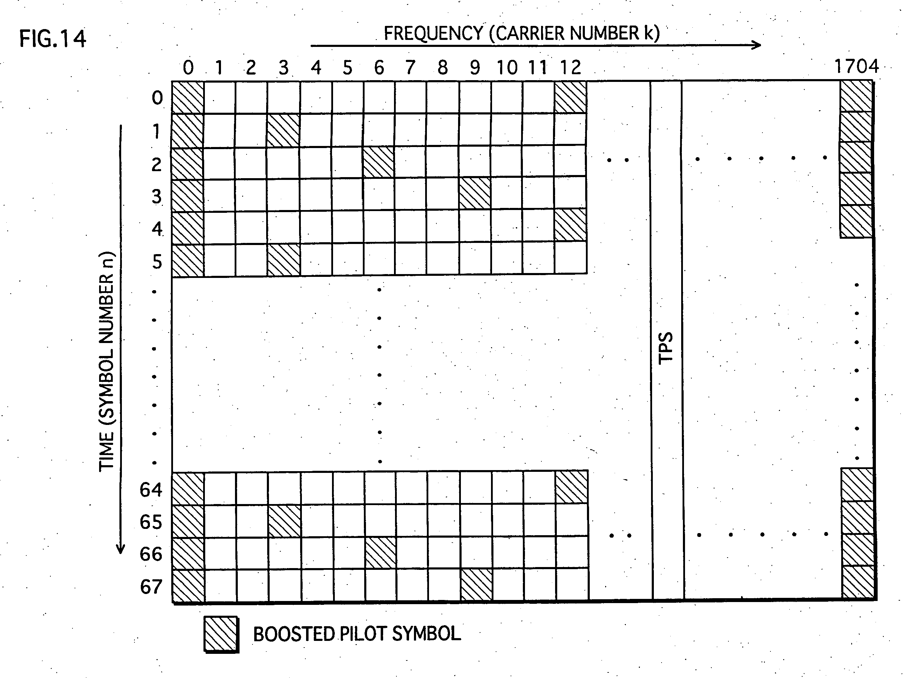

FIG. 14 shows an example of the configuration in a frame of an OFDM signal used in European terrestrial digital broadcasting, using the same notation as FIG. 10. This OFDM signal transmits boosted pilot symbols that correspond to SP symbols, and a TPS signal that corresponds to a TMCC symbol. Details of European terrestrial digital broadcasting can be found in Non-Patent Document 2.

EP 0 898 381 A2 discloses technology for identifying a pilot symbol by obtaining equalization between signals in a reference signal sequence and a received signal sequence.

International Patent Application WO 98/19410 discloses technology for identifying a pilot signal by obtaining a correlation between signals in a received signal sequence in a carrier frequency direction.
Patent Document 1
   Japanese Laid-Open Patent Application No. 2001-298438 (pp. 8-10, FIG. 6)
Non-Patent Document 1
   "Transmission System for Digital Terrestrial Broadcasting; ARIB Standard", Association of Radio Industries and Business, ARIB STD-B31 Version 1.5, July 29, 2003
Non-Patent Document 2
   Digital Video Broadcasting (DVB); Framing structure, channel coding and modulation for digital terrestrial television, European Telecommunication Standards Institute, EN 300 744 V1.1.2 (1997-08)

### SUMMARY OF THE INVENTION

In order to solve the described problems, the object of the present invention is to provide: an OFDM signal equalization apparatus that is capable of specifying the position of pilot symbols and commencing equalization within a short amount time, compared to a conventional apparatus, after complex symbols represented by a frequency domain OFDM signal begin to be provided; a method and program therefore; and a terrestrial digital broadcast reception apparatus to which the OFDM signal equalization is applied. An OFDM signal equalization apparatus according to the invention is provided in claim 1. According to the claimed structure, the OFDM signal equalization apparatus determines groups using periodicity found when the complex symbols are arranged in the predetermined order, and evaluates the correlation between complex symbols in each group in order to specify the complex symbols that are the pilot symbols for use in equalization of the OFDM signal.

As a result, the OFDM signal equalization apparatus is able to specify the pilot symbols using complex symbols of several to several tens of symbol periods, and commence equalization processing. The amount of time required for the OFDM signal equalization apparatus to commence equalization processing is shorter than when using a conventional technique which requires 1.5 to 2 frames of time.

According to the claimed structure, after the synchronizing symbols have been detected equalization processing can be performed using complex symbols specified as pilot symbols using synchronized frames as a reference. Therefore, there is less chance that synchronization, and therefore the pilot symbols, will be lost than when the pilot symbols continue to be specified using of the correlation within each group as a reference, in addition to the effect of being able to commence equalization processing within a short period of time. An OFDM signal equalization method according to the invention is provided in claim 12. A computer executable program according to the invention is provided in claim 22. Further embodiments of the invention are provided in the dependent claims.

### BRIEF DESCRIPTION OF THE DRAWINGS

These and other objects, advantages and features of the invention will become apparent from the following description thereof taken in conjunction with the accompanying drawings which illustrate a specific embodiment of the invention.

In the drawings:
FIG. 1 is a functional block diagram showing an example of the structure of the terrestrial digital broadcast reception apparatus of the present invention;
FIGs. 2A and 2B show examples of an external views of the terrestrial digital broadcast signal of the present invention;
FIG. 3 is a conceptual drawing of four groups of complex symbols;
FIG. 4 is a functional block diagram showing an example of the structure of an equalization control unit;
FIG. 5 is a functional block diagram showing an example of the structure of an SP detection unit;
FIGs. 6A to 6C are functional block diagrams showing examples of the structure of a calculation unit;
FIG. 7 is a chart showing an example of timing in the equalization process of the present invention;
FIG. 8 is a functional block diagram showing another example of the structure of the SP detection unit;
FIG. 9 is a functional block diagram showing yet another example of the structure of the SP detection unit;
FIG. 10 shows an example of the configuration of an OFDM frame in a synchronous modulation portion of an OFDM signal used in Japanese terrestrial digital broadcasting;
FIG. 11 shows an example of the configuration of an OFDM frame in a differential modulation portion of an OFDM signal used in Japanese terrestrial digital broadcasting;
FIG. 12 is a functional block diagram showing an example of the structure of a conventional terrestrial digital broadcast reception apparatus;
FIG. 13 is a chart showing timing in a conventional equalization processing; and
FIG. 14 shows an example of the configuration of a frame of an OFDM signal used in European terrestrial digital broadcasting.

### DESCRIPTION OF THE PREFERRED EMBODIMENTS

In the following, several embodiments are presented. Embodiments not covered by the claims are to be understood as examples useful for understanding the invention.

### <First Embodiment>

The following describes, with reference to the drawings, an OFDM signal equalization apparatus of the first embodiment of the present invention, and a terrestrial digital broadcast reception apparatus in which the OFDM signal equalization apparatus is incorporated.

### <Overall Structure>

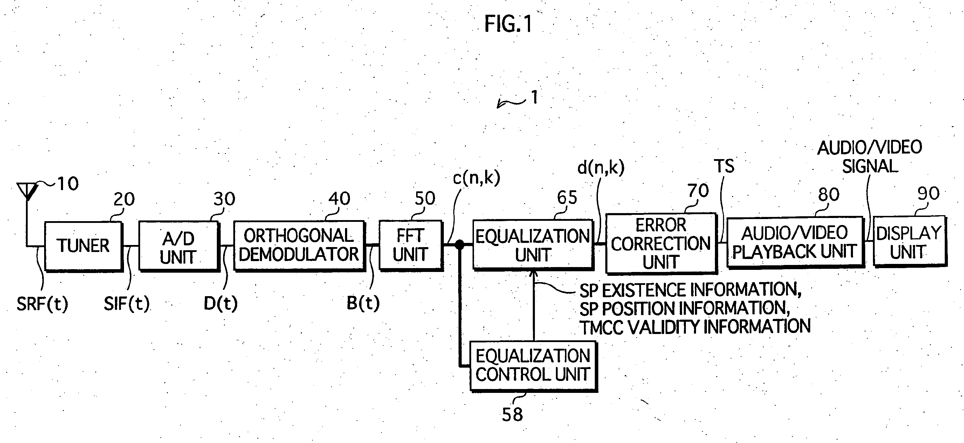

FIG. 1 is a functional block diagram showing the overall structure of the terrestrial digital broadcast reception apparatus. In FIG. 1, structural elements that are the same as those in the terrestrial digital broadcast reception apparatus 9 are shown with the same numbering thereas. The terrestrial digital broadcast reception apparatus 1 differs from the terrestrial digital broadcast reception apparatus 9 in that it has an equalization control unit 58 that is the OFDM signal equalization apparatus of the present invention, and an equalization unit 65 that operates in cooperation with the equalization control unit 58.

The units of the terrestrial digital broadcast reception apparatus 1 may be implemented in the following manner.

The tuner 20 may be implemented by, for example, a high frequency analog circuit that is operable in an RF band.

The A/D unit 30 through to the audio/video playback unit 80 may be implemented with use of, for example, a DPS (digital signal processor), a ROM (read only memory), and a RAM (random access memory). In this case, the units represent each function carried out by the DSP executing a program recorded in the ROM. Data processed by the units is stored in the RAM, and is also passed between the units via the RAM. Alternatively, the units may be implemented with use of ASICs (application specific integrated circuits) or the like as special-purpose hardware circuits for carrying out the respective functions.

The display unit 90 is an audio/videomonitor apparatus that is implemented with a PDP (plasma display panel), an LCD (liquid crystal display), a CRT (cathode ray tube), or the like.

### <External Appearance>

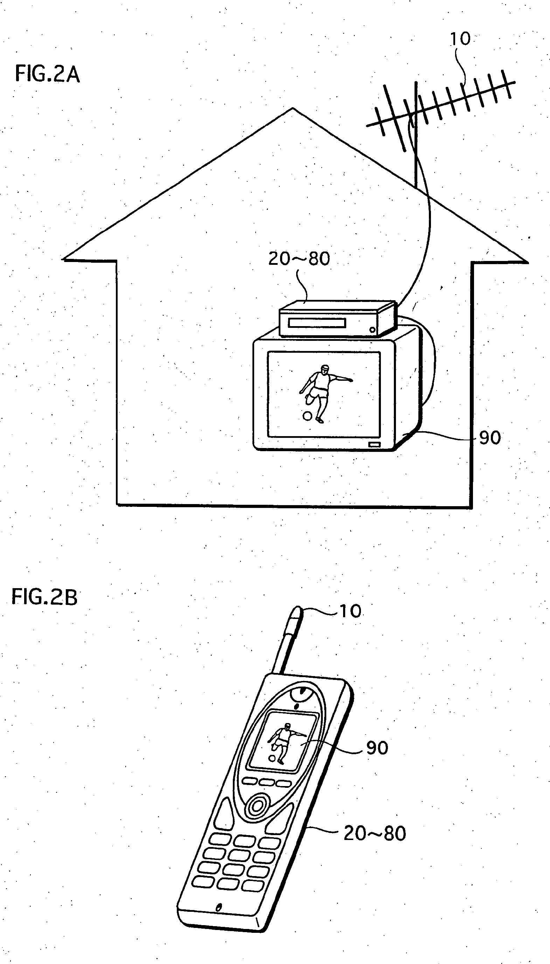

FIGs. 2A and 2B each show an example of the external appearance of the terrestrial digital broadcast reception apparatus 1. FIG. 2A shows an example of the external appearance of the terrestrial digital broadcast reception apparatus 1 embodied as a fixed-type STB (set top box). FIG. 2B shows an example of the external appearance of the terrestrial digital broadcast reception apparatus 1 embodied as a mobile terminal apparatus.

The following describes the equalization control unit 58 and the equalization unit 65 which are unique to the present invention, omitting descriptions of the items identical to the prior art.

### <Equalization control unit 58>

The equalization control unit 58 is provided with complex symbols, which are the same as conventional complex symbols, from the FFT unit 50, and specifies in a shorter amount of time than the conventional TMCC processing unit 51 whether SP symbols are present among the complex symbols and the position of the SP symbols. The equalization control unit 58 then notifies the equalization unit 65 whether SP symbols are present, and the position of the SP symbols.

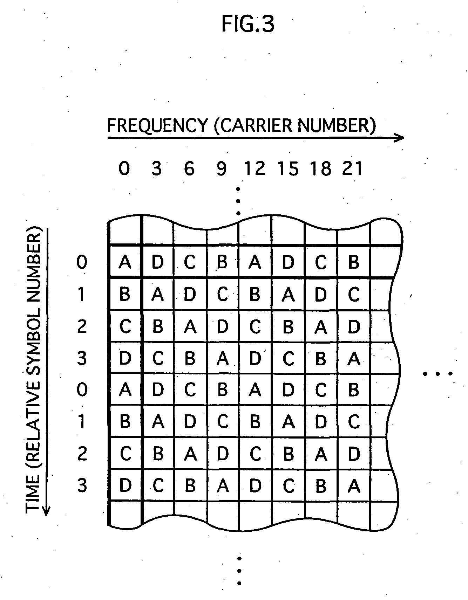

FIG. 3 is a conceptual drawing showing four groups of complex symbols that are possibly SP symbols, in a state in which frame synchronization has not been established (in other words, the symbol numbers of the complex symbols are undetermined). FIG. 3 shows the complex symbols of only carriers engaged in SP symbol transmission arranged in carrier frequency order and temporal order.

If the complex symbols in a synchronous modulation portion are arranged in this order, in each carrier every fourth complex symbol in temporal order is an SP symbol. Furthermore, in each symbol period, every fourth complex symbol in carrier frequency order is an SP symbol. In other words, all complex symbols in one of the groups A to D shown in FIG. 3 are SP symbols. Note that the groups are determined according to relative symbol numbers that recur every four symbol periods.

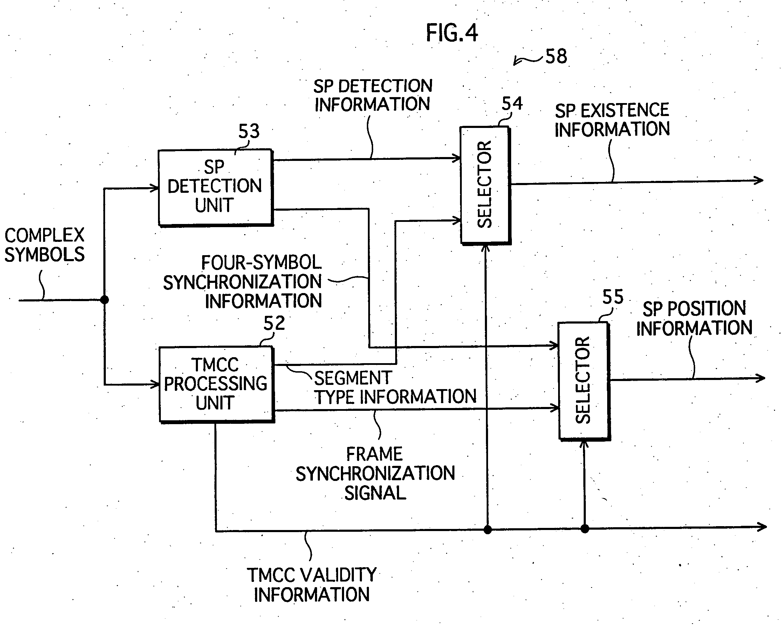

FIG. 4 is a functional block diagram showing the structure of the equalization control unit 58 in detail.

A TMCC processing unit 52, after establishing frame synchronization and decoding TMCC information symbols, outputs TMCC validity information, and also outputs frame synchronization information and segment type information which are the same those in the conventional art.

The SP detection unit 53 specifies whether any SP symbols exist and the position of the SP symbols, by calculating, for each group, an index showing the correlation between the complex symbols in the group. The SP detection unit 53 then outputs SP detection information indicating that the specified SP symbols exist, and four-symbol synchronization information showing the specified position of the SP symbols.

A selector 54 selects the SP detection information if TMCC validity information has not been output, and selects the segment type information if TMCC validity information has been output. The selector 54 then outputs the selected information as SP existence information.

A selector 55 selects the four-symbol synchronization information if TMCC validity information is not output, and selects the frame synchronization information if TMCC validity information is output. The selector 55 then outputs the selected information as SP position information.

### <SP detection unit 53>

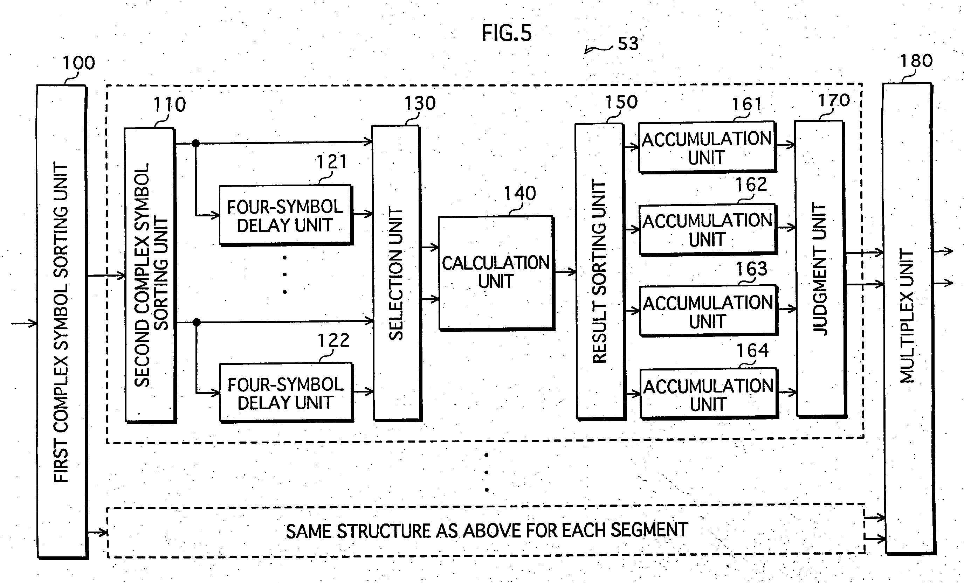

FIG. 5 is a functional block diagram showing the structure of the SP detection unit 53 in detail.

The SP detection unit 53 is provided with complex symbols by the FFT unit 50 in a state in which frame synchronization has not been established.

Here, in order to show one specif ic example, the FFT unit 50 is described as de-multiplexing one OFDM symbol into complex symbols that correspond to each of the carriers in one symbol period, and successively providing the complex symbols to the SP detection unit 53 in order of carrier frequency. Note that carriers referred to here are the carriers of all segments that make up a terrestrial digital broadcast signal.

The SP detection unit 53 is provided by the FFT unit 50 with serial numbers of the carriers across all segments, the serial numbers corresponding to the complex symbols represented by the carriers.

A first complex symbol sorting unit 100 sorts each complex symbol one segment according to the serial number of the carrier that corresponds to the complex symbol. In other words, the first complex symbol sorting unit 100 outputs each complex symbol to a carrier sorting unit corresponding to the segment.

The following processing is performed for each segment of the sorted complex symbols, and therefore processing of one representative segment is described.

Every symbol period, the second complex symbol sorting unit 110 successively receives complex symbols represented by the carriers in the segment in carrier frequency order.

The four-symbol delay units 121, 122, etc. correspond respectively to the carriers that are engaged in SP symbol transmission.

The second complex symbol sorting unit 110 outputs received complex symbols that are represented by carriers engaged in SP symbol transmission to both the four-symbol delay unit corresponding to the carrier and the selection unit 130.

Each of the four symbol delay units 121, 122, etc. holds four received complex symbols, and on receiving a new complex symbol from the second complex symbol sorting unit 110, outputs the oldest of the held complex symbols to the selection unit 130, and replaces the oldest complex symbol with the new complex symbol.

In this way, the four-symbol delay units 121, 122, etc. receive one complex symbol every symbol period, and delay each received complex symbol for four symbol periods.

The selection unit 130 receives one new complex symbol sorted into one of the carriers from the second complex symbol sorting unit 110, and receives the oldest complex symbol from the four symbol delay unit corresponding to the carrier. The selection unit 130 selects both of the received complex symbols, and outputs the selected symbols to the calculation unit 140.

The calculation unit 140 performs one of the following calculations on the two complex symbols received from the selection unit 130: (a) complex division of one complex symbol with the other complex symbol; (b) complex multiplication of the complex conjugate value of one of the complex symbols with the other complex symbol; and (c) complex multiplication of the complex conjugate value of one of the complex symbols with the other complex symbol and normalization of the result of the complex multiplication. The calculation unit 140 then outputs the result of the calculation to the result sorting unit 150.

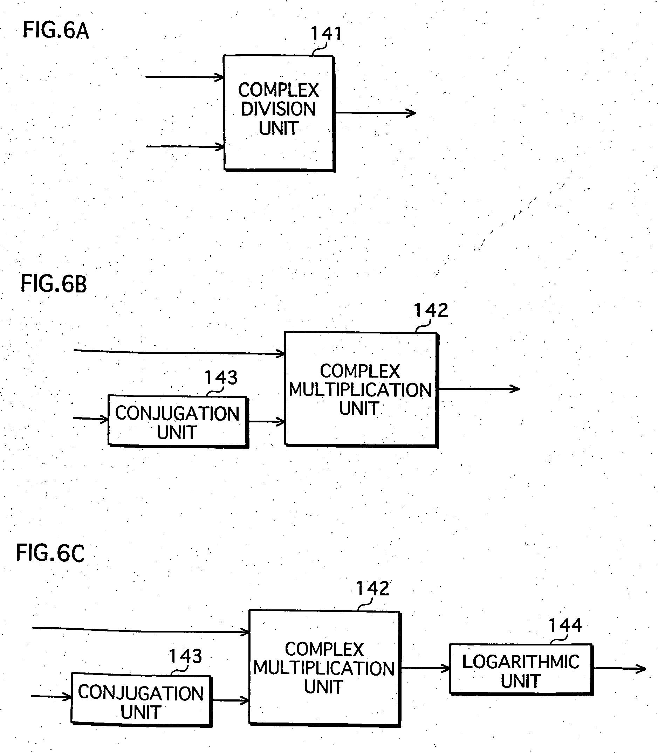

FIGs. 6A, 6B and 6C are functional block diagrams showing examples of structure for executing one of the described calculations. FIG. 6C shows a logarithmic unit 144 as an example of a specific structure for executing normalization. The logarithmic unit 144 expresses the input value with a floating point, and normalizes the input value by using the fixed-point part of the floating point as the normalization result.

Returning to FIG. 5, on receiving the calculation result from the calculation unit 140, the result sorting unit 150 sorts the result into a group. In other words, the result sorting unit 150 outputs the received calculation result to the one of accumulation units 161 to 164 that corresponds to the group. The result sorting unit 150 determines which group to sort the calculation result into based on the carrier number of the carrier that represents the complex symbols for which the calculation was performed, and the recurring relative symbol number.

Alternatively, the result sorting unit 150 may have, for example, an internal carrier number counter and a relative symbol number counter for determining which group to sort the calculation result into. The carrier number counter counts the carrier numbers of the carriers engaged in SP symbol transmission cyclically by increasing the count by three when the result sorting unit 150 outputs a received calculation result to one of the accumulation units 161 to 164. The relative symbol number counter increases by one when the carrier number counter has made one cycle, and counts relative symbol numbers from 0 to 3 cyclically

Here, the result sorting unit 150 holds a table showing the four groups shown in FIG. 3, and determines groups by referring to the contents of the cell shown by the value of the carrier number counter and the value of the relative symbol number counter. Alternatively, the group may be determined without use of a table, but by calculation using the remainder of dividing the value of the carrier number counter by 12, and the value of the relative symbol number counter.

Each of the accumulation units 161 to 164 accumulates respective received calculation results, calculates an absolute value of the accumulated results, and outputs the absolute value to the judgment unit 170. The calculated absolute value represents the power of the accumulated results. The calculation result corresponding to the group that is made up of SP symbols is substantially a same value every time regardless of which of the described calculations the calculation unit 140 performs, and therefore the absolute value of the accumulated results increases as the number of accumulated calculation results increases. In contract, since the calculation results corresponding to other groups are complex values that vary every time, the absolute value of the accumulated calculation results does not increase despite the number of calculation results increasing.

The judgment unit 170 compares the four received absolute values with a predetermined threshold value. When one or more of the four absolute values is equal to or greater than the threshold value, the judgment unit 170 outputs SP detection information indicating that SP symbols exist to a multiplex unit 180. When all four of the absolute values are less than the threshold value, the judgment unit 170 outputs SP detection information indicating that SP symbols do not exist to the multiplex unit 180.

Furthermore, the judgment unit 170 outputs four-symbol synchronization information showing the position of the SP symbols to the multiplex unit 180.

The four-symbol synchronization information output by the judgment unit 170 shows, for example, which of the relative symbol numbers shown in FIG. 3 represents the current symbol period. To this end, the judgment unit 170 monitors which of the calculation results relating to the carriers 0, 3, 6, and 9 is output by the accumulation unit showing the greatest absolute value. The judgment unit 170 outputs four-symbol synchronization information showing relative symbol numbers 0, 1, 2, and 3, in the symbol period in which the calculation result relating to the respective carrier numbers 0, 3, 6, and 9 that shows the highest absolute value is output.

Alternatively, the judgment unit 170 may output four-symbol synchronization information every four symbol periods as a pulse signal showing the symbol period of the relative symbol number 0.

The multiplex unit 180 receives SP detection information and four-symbol synchronization information individually from each of the judgment units that correspond to the segments, and outputs the central frequency of the segments successively in ascending order to the equalization unit 65.

As has been described, the SP detection unit 53 specifies the SP symbol position by evaluating the correlation between complex symbols in each of the four groups of complex symbols that occur every four symbol periods when arranged in temporal order. According to this structure, the SP detection unit 53 is able to specify the SP symbol position within several to several tens of symbol periods irrespective of frame synchronization, and output SP detection information and four-symbol synchronization information.

Note that in this embodiment, an example of a structure in which a four- symbol delay unit is provided for each carrier is given in order to show operations of the SP detection unit 53 more clearly. It is assumed that each of the four-symbols delay units is implemented with a FIFO (first in first out) register, or software that implements FIFO functions. However, in reality it is possible to employ another implementation that has identical functions. For example, the functions of the four-symbol delay units 121, 12, etc. may be achieved by one ring buffer that hold the complex symbols for all carriers together.

### <Equalization unit 65>

The equalization unit 65 is supplied with SP existence information and SP position information by the equalization control unit 58. After the TMCC processing unit 52 has established frame synchronization and decoded the TMCC information symbols, the equalization unit 65 is further provided with TMCC validity information.

When not provided with TMCC validity information, the equalization unit 65 is provided with SP detection information and four-symbol synchronization information that are generated by the SP detection unit 53, as SP existence information and SP position information, respectively.

When the received SP detection information indicates that SP symbols exist, the equalization unit 65 specifies the carrier that represents the SP symbol based on the received four-symbol synchronization information every symbol period, and performs equalization processing using the complex symbol represented by the specified carrier as a reference.

When the received four-symbol synchronization information indicates a relative symbol number, the equalization unit 65 uses the relative symbol number to specify the carrier that represents the SP symbol in the symbol period, irrespective of frame synchronization. If the received four-symbol synchronization information is the pulse signal representing a symbol period that has relative symbol number 0, the equalization unit 65 generates a relative symbol number based on the four-symbol synchronization information.

The equalization processing performed by the equalization unit 65 at this time is basically commonly-known phase and amplitude equalization processing that corrects phase difference and amplitude ratio of other complex symbols according to the phase difference and amplitude ratio of the complex symbol and the original SP symbol. The only point that differs from conventional equalization processing is that the equalization unit 65 uses the four-symbol synchronization information as a basis for specifying the position of the complex symbol used as the reference.

When the received SP detection information indicates that SP symbols are not present, the equalization unit 65 does not perform equalization processing.

When supplied with TMCC validity information, the equalization unit 65 is supplied with conventional segment type information and frame synchronization information generated by the TMCC processing information 52, as SP existence information and SP position information, respectively.

When the received segment type information indicates a synchronous modulation portion, the equalization unit 65 performs conventional equalization processing. When the received segment type information indicates a differential modulation portion, the equalization unit 65 does not perform equalization processing.

### <Details of Equalization Processing>

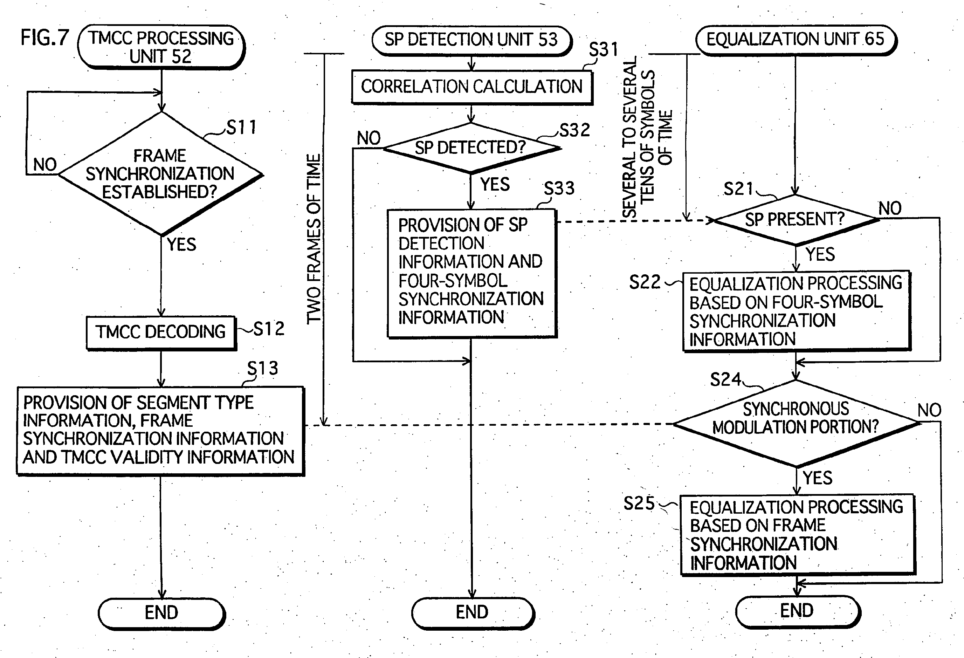

FIG. 7 is a flowchart showing the equalization processing of the first embodiment in detail. The following steps are added to the conventional equalization processing shown in FIG. 13: a correlation calculation step (S31), an SP detection step (S32), and an SP detection information and four-symbol synchronization information provision step (S33), all of which are performed by the SP detection unit; and an SP existence judgment step based on the SP detection information (S21), and an equalization processing step based on the four-symbol synchronization information (S22), both of which are performed by the equalization unit.

As has been described, instead of the maximum of two frames' worth of time taken for the TMCC processing unit 52 to provide frame synchronization information and segment type information to the equalization unit 65 after beginning to be supplied with complex symbols, the SP detection unit 53 provides SP detection information and four-symbol synchronization information to the equalization unit 65 within several to several tens of symbols' worth of time. As a result, the equalization unit 65 is able to commence equalization processing in step S22 more quickly than conventionally, based on the four-symbol synchronization information.

### <Second Embodiment>

The OFDM signal equalization apparatus of the second embodiment is a modification of the equalization control unit 58 of the first embodiment, and the two are interchangeable in the terrestrial digital broadcast reception apparatus 1. The following describes the equalization control unit of the second embodiment with reference to the drawings.

The difference between the equalization control unit of the second embodiment and the equalization control unit 58 is the SP detection unit.

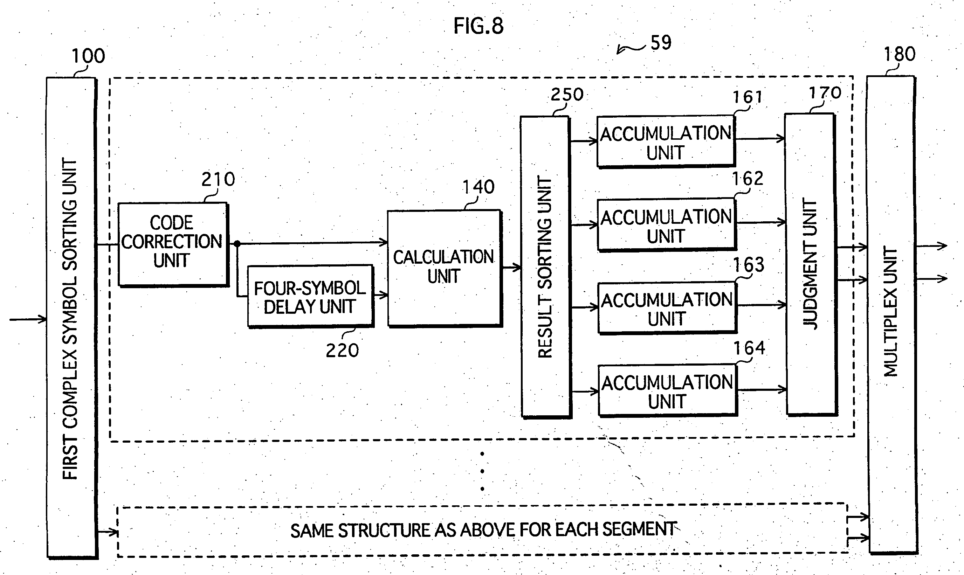

FIG. 8 is a functional block diagram showing the structure of an SP detection unit 59 in the equalization control unit of the second embodiment. Structural elements in the SP detection unit 59 that are the same as those in the SP detection unit 53 shown in FIG. 5 have the same numbering thereas.

Every symbol period, a code correction unit 210 successively receives complex symbols represented by the carriers in one segment in carrier frequency order. The code correction unit 210 multiplies each received complex symbol that is represented by a carrier that transmits SP symbols with a code that is unique to the carrier.

Non-Patent Document 1 specifies that the carrier unique code should be a PRBS (pseudo random bit sequence) value generated for the carrier following a polynomial g(x) = x¹¹ + x⁹ + 1, in frequency order of all carriers included in the terrestrial digital broadcast signal.

In particular, this coding determines the code of the SP symbols transmitted by the carriers engaged in SP symbol transmission.

The code correction unit 210 corrects coding of each received complex symbol by generating a PRBS value, and multiplying the complex symbol with the generated PRBS value, so that all SP symbols are represented by a particular code. The code correction unit 210 then outputs the code-corrected complex symbols to a four-symbol delay unit 220 and the calculation unit 140.

The four-symbol delay unit 220 holds four most recently received complex symbols. On receiving a new complex symbol, the four-symbol delay unit 220 outputs the oldest of the held complex symbols to the calculation unit 140, and replaces the oldest complex symbol with the new complex symbol.

In this way, each symbol period, the four-symbol delay unit 220 successively receives a same number of complex symbols as carriers that relate to SP symbol transmission in carrier frequency order from the second complex symbol sorting unit 110, and holds four of the complex symbols at a time. At the same time, the four-symbol delay unit 220 outputs a complex symbol represented by the carrier that is four later in the frequency order. In other words, the four-symbol delay unit 220 delays each received complex symbol for four carriers' worth of time in the frequency order.

The calculation unit 140 receives a new complex symbol from the code correction unit 210, and receives the oldest complex symbol from the four-symbol delay unit 220. The calculation unit 140 then performs calculation on the received complex symbols as described in the first embodiment, and outputs the calculation result to a result sorting unit 250.

On receiving the calculation result from calculation unit 140, the result sorting unit 250 sorts the calculation result into a group. Here, the result sorting unit 250 determines which group to sort the calculation result into based on the lower carrier number of the carriers that represent the complex symbols on which the calculation was performed, and the recurring relative symbol number.

Alternatively, the result sorting unit 250 may include an internal carrier number counter and an internal relative symbol number counter as described for the result sorting unit 150 for determining the group into which to sort the calculation result. However, since none of the highest four carriers is included in the calculation as the lower frequency in the second embodiment, the carrier number counter of the result sorting unit 250 does not count the highest four carriers.

The accumulation units 161 to 164 and the judgment unit 170 are identical to those described in the first embodiment.

As has been described, the SP detection unit 59 specifies the SP symbol position by evaluating the extent of correlation of complex symbols in each of the four groups of complex symbols that occur every four symbol periods when arranged in carrier frequency order. According to this structure, the SP detection unit 59 is able to specify the SP symbol position within several to several tens of symbol periods, irrespective of frame synchronization, and output SP detection information and four-symbol synchronization information.

Since the SP detection unit 59 has only one four-symbol delay unit and does not require a four-symbol delay unit for each carrier as required by the SP detection unit 53, the SP detection unit 59 is able to process with less memory capacity than the SP detection unit 53. Furthermore, the SP detection unit 59 performs calculation on the obtained complex symbols in one symbol period, and therefore does not delay the complex symbols for four symbol periods. As a result, the SP detection information and the four-symbol synchronization information can be expected to be output in an even shorter time than by the SP detection unit 53.

### <Third Embodiment>

The OFDM signal equalization apparatus of the third embodiment is a modification of the equalization control unit 58 of the first embodiment. This modified SP detection unit is particularly suitable for detecting the position of boosted pilot symbols in an OFDM signal used in European terrestrial digital broadcasting. The following describes the SP detection unit of the third embodiment with reference to the drawings.

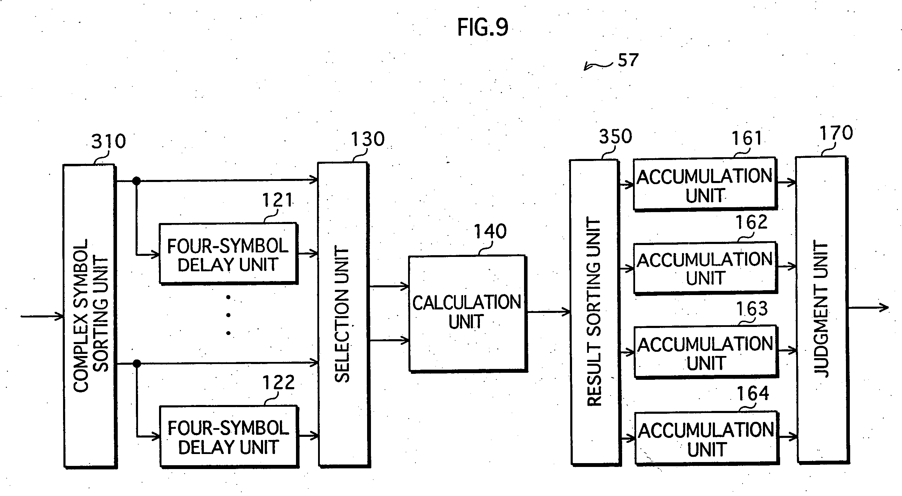

FIG. 9 is a functional block diagram showing the structure of an SP detection unit 57 of the third embodiment. Structural elements in the SP detection unit 57 that are the same as those in the SP detection unit 53 shown in FIG. 5 have the same numbering thereas.

The first complex symbol sorting unit 100 and the multiplex unit 180 of the SP detection unit 53 are absent in the SP detection unit 57 because a segment structure is not employed in OFDM signals in European terrestrial digital broadcasting.

Every symbol period, a complex symbol sorting unit 310 successively receives complex symbols represented by carriers in the OFDM signal, and sorts only complex symbols of carriers engaged in boosted pilot symbol transmission.

As shown in FIG. 14, according to European specifications predetermined carriers engaged in boosted pilot transmission transmit a boosted pilot symbol in every symbol period. These carriers are called continual pilot carriers. Information for specifying the position of the boosted pilot symbols cannot be obtained by processing the continualpilot carrier, and therefore the complex symbol sorting unit 310 excludes complex symbols represented by the continual pilot carrier from sorting.

A result sorting unit 350 is the result sorting unit 150 having been modified to exclude the continual pilot carrier. For example, the result sorting unit 350 may hold the carrier number of the continual pilot carrier in a table, and control so that when counting the carrier number counter skips the carrier number included in the table.

According to the stated structure, the SP detection unit 57 detects the position of the boosted pilot in a manner that is particularly suited to OFDM signals used in European terrestrial digital broadcasting.

Note that a structure that does not exclude the continual pilot carrier is possible. The continual pilot carrier is positioned such that the complex symbols thereof are sorted equally into the groups, and increase the accumulated results of each group by the same amount. Therefore, in reality designating the position of the boosted pilot symbols poses no problem other than a slight reduction in processing efficiency.

Alternatively, the position of the SP symbols can be specified by arranging the complex symbols in carrier frequency order without excluding the continual pilot carrier, and evaluating the extent of correlation between the complex symbols in each resulting group.

Although the present invention has been fully described by way of examples with reference to the accompanying drawings, it is to be noted that various changes and modifications will be apparent to those skilled in the art within the scope of the appended claims.

## Claims

1. An OFDM, orthogonal frequency-division multiplexing, signal equalization apparatus for equalizing a frequency domain OFDM signal using pilot symbols, wherein predetermined complex symbols represented by the OFDM signal are arranged in a predetermined order, and every N-th, with 2 ≤ N, complex symbol is a pilot symbol, said predetermined complex symbols further comprising synchronizing symbols which indicate frame synchronization timing of the OFDM signal and wherein the positions of the pilot symbols have a predetermined relative relationship with the positions of the synchronizing symbols, said apparatus comprising:
an index calculation unit (53) operable to calculate an index for each of N groups of complex symbols, each group including a different one of every N-th complex symbols in the predetermined order, each index indicating a correlation between the complex symbols in the group;
an equalization unit (58) operable to equalize the OFDM signal using the complex symbols included in the group whose calculated index is greatest; and
a synchronizing symbol detection unit (52) operable to detect the synchronizing symbols in the OFDM signal, wherein before detection of the synchronizing symbols, the equalization unit equalizes the OFDM signal using the complex symbols included in the group whose calculated index is greatest, and, after detection of the synchronizing symbols, the equalization unit equalizes the OFDM signal using the complex symbols whose positions have said predetermined relative relationship with the positions of the synchronizing symbols.

2. The OFDM signal equalization apparatus of Claim 1, further comprising
an equalization prohibition unit operable to prohibit the equalization unit from equalizing the OFDM signal when all the indices are below a predetermined threshold value.

3. The OFDM signal equalization apparatus of Claim 2,
wherein the complex symbols represented by the OFDM signal further include identifying symbols that indicate whether pilot symbols are present or absent in the OFDM signal,
the OFDM signal equalization apparatus further comprises an identifying symbol detection unit operable to detect the identifying symbols in the OFDM signal, and before detection of the identifying symbols, the equalization prohibition unit prohibits the equalization unit from equalizing the OFDM signal when all the indices are below the predetermined threshold value, and after detection of the identifying symbols, the equalization prohibition unit prohibits the equalization unit from equalizing the OFDM signal if the identifying symbols indicate that the pilot symbols are absent.

4. The OFDM signal equalization apparatus of Claim 2,
wherein the OFDM signal is composed of a plurality of OFDM segments comprising a plurality of carriers, the OFDM signal apparatus further comprises a complex symbol sorting unit operable to sort each complex symbol into a segment to which a carrier that represents the complex symbol belongs,
the index calculation unit calculates an index for each segment, based on the complex symbols sorted into the segment,
the equalization unit equalizes the signals represented by the carriers belonging to each segment, based on the complex symbols in the group whose index is greatest, each segment being equalized separately from other segments, and
the equalization prohibition unit prohibits the equalization unit from equalizing signals represented by carriers belonging to a segment whose calculated index is below the predetermined threshold value.

5. The OFDM signal equalization apparatus of Claim 1,
wherein in the OFDM signal, if complex symbols of a predetermined carrier are arranged in temporal order, every N-th complex symbol is the pilot symbol, the index calculation unit includes:
a holding sub-unit operable to hold *N* complex symbols most recently represented by the predetermined carrier;
a calculation sub-unit operable to perform complex division of one of the following (a) and (b) with the other: (a) a complex symbol newly represented by the carrier and (b) an oldest of the held complex symbols;
a result sorting sub-unit operable to sort a result of the calculation into one of *N* groups; and
an accumulation sub-unit operable to accumulate the sorted results separately for each group, and
the index calculation unit calculates, as the index of each group, an absolute value of the accumulated results of the group.

6. The OFDM signal equalization apparatus of Claim 1,
wherein in the OFDM signal if complex symbols of a predetermined carrier are arranged in temporal order, every N-th complex symbol is the pilot symbol, the index calculation unit includes:
a holding sub-unit operable to hold *N* complex symbols most recently represented by the predetermined carrier;
a calculation sub-unit operable to perform complex multiplication of a conjugate value of one of the following (a) and (b) with the other: (a) a complex symbol newly represented by the carrier and (b) an oldest of the held complex symbols;
a result sorting sub-unit operable to sort a result of the calculation into one of *N* groups; and
an accumulation sub-unit operable to accumulate the sorted results separately for each group, and
the index calculation unit calculates, as the index of each group, an absolute value of the accumulated results of the group.

7. The OFDM signal equalization apparatus of Claim 1,
wherein in the OFDM signal, if complex symbols of a predetermined carrier are arranged in temporal order, every N-th complex symbol is the pilot symbol,
the index calculation unit includes:
a holding sub-unit operable to hold N complex symbols most recently represented by the predetermined carrier;
a calculation sub-unit operable to perform complex multiplication of a conjugate value of one of the following (a) and (b) with the other, and normalize a result of the complex multiplication: (a) a complex symbol newly represented by the carrier and (b) an oldest of the held complex symbols;
a result sorting sub-unit operable to sort a result of the calculation into one of *N* groups; and
an accumulation sub-unit operable to accumulate the sorted results separately for each group, and
the index calculation unit calculates, as the index of each group, an absolute value of the accumulated results of the group.

8. The OFDM signal equalization apparatus of Claim 1,
wherein the complex symbols represented by the OFDM signal are transmitted by a predetermined plurality of carriers,
if the complex symbols in one symbol period are arranged in a carrier frequency order, every N-th complex symbol is the pilot signal,
the index calculation unit includes:
a holding sub-unit operable to hold N complex symbols that are consecutive in the carrier frequency order;
a calculation sub-unit operable to (a) multiply each of (i) a complex symbol that is in the OFDM signal and is directly successive in the carrier frequency order to the held complex symbols and (ii) a complex symbol among the held complex symbols that has a smallest carrier frequency, respectively, with a code that corresponds to a carrier representing the complex symbol to be multiplied, thereby obtaining respective complex values, and (b) perform complex division of one of the complex values with the other complex value;
a result sorting sub-unit operable to sort a result of the calculation into one of *N* groups; and
an accumulation sub-unit operable to accumulate sorted results separately for each group, and
the index calculation unit calculates, as the index of each group, an absolute value of the accumulated results of the group.

9. The OFDM signal equalization apparatus of Claim 1,
wherein the complex symbols represented by the OFDM signal are transmitted by a predetermined plurality of carriers,
if the complex symbols in one symbol period are arranged in a carrier frequency order, every N-th complex symbol is the pilot signal,
the index calculation unit includes:
a holding sub-unit operable to hold N complex symbols that are consecutive in the carrier frequency order;
a calculation sub-unit operable to (a) multiply each of (i) a complex symbol that is in the OFDM signal and is directly successive in the carrier frequency order to the held complex symbols and (ii) a complex symbol among the held complex symbols that has a smallest carrier frequency, respectively, with a code that corresponds to a carrier representing the complex symbol to be multiplied, thereby obtaining respective complex values, and (b) perform complex multiplication of a conjugate value of one of the complex values with the other complex value;
a result sorting sub-unit operable to sort a result of the calculation into one of *N* groups; and
an accumulation sub-unit operable to accumulate sorted results separately for each group, and
the index calculation unit calculates, as the index of each group, an absolute value of the accumulated results of the group.

10. The OFDM signal equalization apparatus of Claim 1,
wherein the complex symbols represented by the OFDM signal are transmitted by a predetermined plurality of carriers,
if the complex symbols in one symbol period are arranged in a carrier frequency order, every N-th complex symbol is the pilot signal,
the index calculation unit includes:
a holding sub-unit operable to hold *N* complex symbols that are consecutive in the carrier frequency order;
a calculation sub-unit operable to (a) multiply each of (i) a complex symbol that is in the OFDM signal and is directly successive in the carrier frequency order to the held complex symbols and (ii) a complex symbol among the held complex symbols that has a smallest carrier frequency, respectively, with a code that corresponds to a carrier representing the complex symbol to be multiplied, thereby obtaining-respective complex values, and (b) perform- complex multiplication of a conjugate value of one of the complex values with the other complex value, and normalize a result of the complex multiplication;
a result sorting sub-unit operable to sort a result of the calculation into one of N groups; and
an accumulation sub-unit operable to accumulate sorted results separately for each group, and
the index calculation unit calculates, as the index of each group, an absolute value of the accumulated results of the group,

11. A terrestrial digital broadcast reception apparatus including the OFDM signal equalization apparatus of claim 1, wherein said terrestrial digital broadcast reception apparatus has functions of receiving a time domain OFDM signal, Fourier converting the received signal to a frequency domain OFDM signal, equalizing the frequency domain OFDM signal, and playing back one or both of video and audio from the equalized OFDM signal,
wherein if predetermined complex symbols represented by the frequency domain OFDM signal are arranged in a predetermined order, every N-th complex symbol is a pilot symbol used in signal equalization, and
the OFDM signal equalization apparatus equalizes the frequency domain OFDM signal.

12. An OFDM, orthogonal frequency division multiplexing, signal equalization method for equalizing a frequency domain OFDM signal using pilot symbols, wherein predetermined complex symbols represented by the OFDM signal are arranged in a predetermined order, and every N-th, with 2 ≤ N, complex symbol is a pilot symbol, said predetermined complex symbols further comprising synchronizing symbols which indicate frame synchronization timing of the OFDM signal and wherein the positions of the pilot symbols have a predetermined relative relationship with the positions of the synchronizing symbols, said method comprising:
an index calculation step of calculating an index for each *of* N groups of complex symbols, each group including a different one of every N-th complex symbols in the predetermined order, each index indicating a correlation between the complex symbols in the group;
an equalization step of equalizing the OFDM signal using the complex symbols included in the group whose calculated index is greatest; and
a synchronizing symbol detection step of detecting the synchronizing symbols in the OFDM signal, wherein before detection of the synchronizing symbols, the equalization step equalizes the OFDM signal using the complex symbols included in the group whose calculated index is greatest, and, after detection of the synchronous symbols, the equalization step equalizes the OFDM signal using the pilot symbols whose positions have the predetermined relative relationship with the positions of the synchronizing symbols.

13. The OFDM signal equalization, method of Claim 12, further comprising
an equalization prohibition step of prohibiting the equalization step from equalizing the OFDM signal when all the indices are below the predetermined threshold value.

14. The OFDM signal equalization method of Claim 13,
wherein the complex symbols represented by the OFDM signal further include identifying symbols that indicate whether pilot symbols are present or absent in the OFDM signal,
the OFDM signal equalization method further comprises an identifying symbol detection step of detecting the identifying symbols in the OFDM signal, and before detection of the identifying symbols, the equalization prohibition step prohibits the equalization step from equalizing the OFDM signal when all the indices are below the predetermined threshold value, and after detection of the identifying symbols, the equalization prohibition step prohibits the equalization step from equalizing the OFDM signal if the identifying symbols indicate that the pilot symbols are absent.

15. The OFDM signal equalization method of Claim 12,
wherein the OFDM signal is composed of a plurality of OFDM segments comprising a plurality of carriers, the OFDM signal equalization method further comprises a complex symbol sorting step of sorting each complex symbol into a segment to which a carrier that represents the complex symbol belongs,
the index calculation step calculates an index for each segment, based on the complex symbols sorted into the segment,
the equalization step equalizes the signals represented by the carriers belonging to each segment, based on the complex symbols in the group whose index is greatest, each segment being equalized separately from other segments, and
the equalization prohibition step prohibits the equalization step from equalizing signals represented by carriers belonging to a segment whose calculated index is below the predetermined threshold value.

16. The OFDM signal equalization method of Claim 12
wherein in the OFDM signal, if complex symbols of a predetermined carrier are arranged in temporal order, every N-th complex symbol is the pilot symbol,
the index calculation step includes:
a holding sub-step of holding N complex symbols most recently represented by the predetermined carrier;
a calculation sub-step of performing complex division of one of the following (a) and (b) with the other; (a) a complex symbol newly represented by the carrier and (b) an oldest of the held complex symbols;
a result sorting sub-step of sorting a result of the calculation into one of N groups;
and
an accumulation sub-step of accumulating the sorted results separately for each group, and
the index calculation step calculates, as the index of each group, an absolute value of the accumulated results of the group.

17. The OFDM signal equalization method of Claim 12,
wherein in the OFDM signal, if complex symbols of a predetermined carrier are arranged in temporal order, every N-th complex symbol is the pilot symbol,
the index calculation step includes:
a holding sub-step of holding N complex symbols most recently represented by the predetermined carrier;
a calculation sub-step of performing complex multiplication of a conjugate value of one of the following (a) and (b) with the other: (a) a complex symbol newly represented by the carrier and (b) an oldest of the held complex symbols;
a result sorting sub-step of sorting a result of the calculation into one of N groups;
and
an accumulation sub-step of accumulating the sorted results separately for each group, and
the index calculation step calculates, as the index of each group, an absolute value of the accumulated results of the group.

18. The OFDM signal equalization method of Claim 12,
wherein in the OFDM signal, if complex symbols of a predetermined carrier are arranged in temporal order, every N-th complex symbol is the pilot symbol,
the index calculation step includes:
a holding sub-step of holding N complex symbols most recently represented by the predetermined-carrier;
a calculation sub-step of performing complex multiplication of a conjugate value of one of the following (a) and (b) with the other, and normalize a result of the complex multiplication: (a) a complex symbol newly represented by the carrier and (b) an oldest of the held complex symbols;
a result sorting sub-step of sorting a result of the calculation into one of N groups;
and
an accumulation sub-step of accumulating the sorted results separately for each group, and
the index calculation step calculates, as the index of each group, an absolute value of the-accumulated results of the group.

19. The OFDM signal equalization method of Claim 12,
wherein the complex symbols represented by the OFDM signal are transmitted by a predetermined plurality of carriers,
if the complex symbols in one symbol period are arranged in a carrier frequency order, every N-th complex symbol is the pilot signal,
the index calculation step includes:
a holding sub-step of holding N complex symbols that are consecutive in the carrier frequency order;
a calculation sub-step of (a) multiplying each of (i) a complex symbol that is in the OFDM signal and is directly successive in the carrier frequency order to the held complex symbols and (ii) a complex symbol among the held complex symbols that has a smallest carrier frequency, respectively, with a code that corresponds to a carrier representing the complex symbol to be multiplied, thereby obtaining respective complex values, and (b) performing complex division of one of the complex values with the other complex value;
a result sorting sub-step of sorting a result of the calculation into one of N groups;
and
an accumulation sub-step of accumulating sorted results separately for each group,
and
the index calculation step calculates, as the index of each group, an absolute value of the accumulated results of the group.

20. The OFDM signal equalization method of Claim 12,
wherein the complex symbols represented by the OFDM signal are transmitted by a predetermined plurality of carriers,
if the complex symbols in one symbol period are arranged in a carrier frequency order, every N-th complex symbol is the pilot signal,
the index calculation step includes:
a holding sub-step of holding N complex symbols that are consecutive in the carrier frequency order;
a calculation sub-step of (a) multiplying each of (i) a complex symbol that is in the OFDM signal and is directly successive in the carrier frequency order to the held complex symbols and (ii) a complex symbol among the held complex symbols that has a smallest carrier frequency, respectively, with a code that corresponds to a carrier representing the complex symbol to be multiplied, thereby obtaining respective complex values, and (b) performing complex multiplication of a conjugate value of one of the complex values with the other complex value;
a result sorting sub-step of sorting a result of the calculation into one of N groups;
and
an accumulation sub-step of accumulating sorted results separately for each group,
and
the index calculation step calculates, as the index of each group, an absolute value of the accumulated results of the group.

21. The OFDM signal equalization method of Claim 12,
wherein the complex symbols represented by the OFDM signal are transmitted by a predetermined plurality of carriers,
if the complex symbols in one symbol period are arranged in a carrier frequency order, every N-th complex symbol is the pilot signal,
the index calculation step includes:
a holding sub-step of holding N complex symbols that are consecutive in the carrier frequency order;
a calculation sub-step of (a) multiplying each of (i) a complex symbol that is in the OFDM signal and is directly successive in the carrier frequency order to the held complex symbols and (ii) a complex symbol among the held complex symbols that has a smallest carrier frequency, respectively, with a code that corresponds to a carrier representing the complex symbol to be multiplied, thereby obtaining respective complex values, and (b) performing complex multiplication of a conjugate value of one of the complex values with the other complex value, and normalize a result of the complex multiplication;
a result sorting sub-step of sorting a result of the calculation into one of N groups;
and
an accumulation sub-step of accumulating sorted results separately for each group,
and
the index calculation step calculates, as the index of each group, an absolute value of the accumulated results of the group.

22. A computer executable program adapted to perform the method of any of claims 12 to 21 when executed by a computer.

## Patentansprüche

1. OFDM-Signalausgleichsvorrichtung (Orthogonal Frequency Division Multiplexing) zum Ausgleichen eines Frequenzbereich-OFDM-Signals unter Verwendung von Pilotsymbolen, wobei
vorgegebene komplexe Symbole, die von den OFDM-Signalen repräsentiert werden, in einer vorgegebenen Reihenfolge angeordnet sind, und jedes N-te, wobei 2 ≤ N, komplexe Symbol ein Pilotsymbol ist,
wobei die vorgegebenen komplexen Symbole des Weiteren Synchronisationssymbole umfassen, die eine Frame-Synchronisationstaktung des OFDM-Signals anzeigen, und wobei die Positionen der Pilotsymbole eine vorgegebene relative Beziehung zu den Positionen der Synchronisationssymbole aufweisen, wobei die Vorrichtung umfasst:
eine Indexberechnungseinheit (53), die in Funktion einen Index für jede aus N-Gruppen von komplexen Symbolen berechnen kann, wobei jede Gruppe ein anderes aus allen N-ten komplexen Symbolen in der vorgegebenen Reihenfolge enthält, wobei jeder Index eine Korrelation zwischen den komplexen Symbolen in der Gruppe anzeigt;
eine Ausgleichseinheit (58), die in Funktion das OFDM-Signal unter Verwendung der komplexen Symbole ausgleichen kann, die in der Gruppe enthalten sind, deren berechneter Index am größten ist; und
eine Synchronisationssymbol-Ermittlungseinheit (52), die in Funktion die Synchronisationssymbole in dem OFDM-Signal ermitteln kann,
wobei
die Ausgleichseinheit vor der Ermittlung der Synchronisationssymbole das OFDM-Signal unter Verwendung der komplexen Symbole ausgleicht, die in der Gruppe enthalten sind, deren berechneter Index am größten ist, und die Ausgleichseinheit nach der Ermittlung der Synchronisationssymbole das OFDM-Signal unter Verwendung der komplexen Pilotsymbole ausgleicht, deren Positionen die vorgegebene relative Beziehung zu den Positionen der Synchronisationssymbole aufweisen.

2. OFDM-Signalausgleichsvorrichtung nach Anspruch 1, des Weiteren umfassend eine Ausgleichsverhinderungseinheit, die in Funktion die Ausgleichseinheit daran hindern kann, das OFDM-Signal auszugleichen, wenn alle Indices unterhalb eines vorgegebenen Schwellenwerts liegen.

3. OFDM-Signalausgleichsvorrichtung nach Anspruch 2,
wobei die komplexen Symbole, die von dem OFDM-Signal repräsentiert werden, des Weiteren Identifizierungssymbole beinhalten, die anzeigen, ob Pilotsignale in dem OFDM-Signal vorhanden oder abwesend sind,
wobei die OFDM-Signalausgleichsvorrichtung des Weiteren eine Identifizierungssymbol-Ermittlungseinheit umfasst, die in Funktion die Identifizierungssymbole in dem OFDM-Signal ermitteln kann, und
wobei die Ausgleichsverhinderungseinheit vor der Ermittlung der Identifizierungssymbole verhindert, dass die Ausgleichseinheit das OFDM-Signal ausgleicht, wenn alle Indices unterhalb des vorgegebenen Schwellenwerts liegen, und wobei die Ausgleichsverhinderungseinheit nach der Ermittlung der Identifizierungssymbole verhindert, dass die Ausgleichseinheit das OFDM-Signal ausgleicht, wenn die Identifizierungssymbole anzeigen, dass die Pilotsymbole abwesend sind.

4. OFDM-Signalausgleichsvorrichtung nach Anspruch 2,
wobei das OFDM-Signal aus einer Vielzahl von OFDM-Segmenten besteht, umfassend eine Vielzahl von Trägern,
wobei die OFDM-Signalvorrichtung das Weiteren eine Sortiereinheit für komplexe Symbole umfasst, die in Funktion die einzelnen komplexen Symbole in ein Segment sortieren kann, zu dem ein Träger gehört, der das komplexe Symbol repräsentiert,
wobei die Indexberechnungseinheit einen Index für jedes Segment basierend auf den komplexen Symbolen berechnet, die in das Segment sortiert wurden,
wobei die Ausgleichseinheit die Signale ausgleicht, die von den Trägern repräsentiert werden, die zu den einzelnen Segmenten gehören, basierend auf den komplexen Symbolen in der Gruppe, deren Index am größten ist, wobei jedes Segment getrennt von anderen Segmenten ausgeglichen wird, und
wobei die Ausgleichsverhinderungseinheit verhindert, dass die Ausgleichseinheit Signale ausgleicht, die von Trägern repräsentiert werden, die zu einem Segment gehören, dessen berechneter Index unterhalb des vorgegebenen Schwellenwerts liegt.

5. OFDM-Signalausgleichsvorrichtung nach Anspruch 1,
wobei in dem OFDM-Signal, wenn komplexe Symbole eines vorgegebenen Trägers in zeitlicher Reihenfolge angeordnet sind, jedes N-te komplexe Symbol das Pilotsymbol ist, wobei die Indexberechnungseinheit beinhaltet:
eine Halteuntereinheit, die in Funktion N komplexe Symbole halten kann, die zuletzt von dem vorgegebenen Träger repräsentiert wurden;
eine Berechnungsuntereinheit, die in Funktion eine komplexe Division von einem aus dem folgenden (a) und (b) mit dem anderen durchführen kann: (a) ein komplexes Symbol, das neu von dem Träger repräsentiert wird und (b) ein ältestes der gehaltenen komplexen Symbole;
eine Ergebnissortierungsuntereinheit, die in Funktion ein Ergebnis der Berechnung in eine von N-Gruppen sortieren kann; und
eine Akkumulierungsuntereinheit, die in Funktion die sortierten Ergebnisse separat für jede Gruppe akkumulieren kann, und
wobei die Indexberechnungseinheit als Index für jede Gruppe einen absoluten Wert der akkumulierten Ergebnisse der Gruppe berechnet.

6. OFDM-Signalausgleichsvorrichtung nach Anspruch 1, wobei in dem OFDM-Signal, wenn komplexe Symbole eines vorgegebenen Trägers in zeitlicher Reihenfolge angeordnet sind, jedes N-te komplexe Symbol das Pilotsymbol ist, wobei die Indexberechnungseinheit beinhaltet:
eine Halteuntereinheit, die in Funktion N komplexe Symbole halten kann, die zuletzt von dem vorgegebenen Träger repräsentiert wurden;
eine Berechnungsuntereinheit, die in Funktion eine komplexe Multiplikation eines konjugierten Wertes von einem aus dem folgenden (a) und (b) mit dem anderen durchführen kann: (a) ein komplexes Symbol, das neu von dem Träger repräsentiert wird und (b) ein ältestes der gehaltenen komplexen Symbole;
eine Ergebnissortierungsuntereinheit, die in Funktion ein Ergebnis der Berechnung in eine von N-Gruppen sortieren kann; und
eine Akkumulierungsuntereinheit, die in Funktion die sortierten Ergebnisse separat für jede Gruppe akkumulieren kann, und
wobei die Indexberechnungseinheit als Index für jede Gruppe einen absoluten Wert der akkumulierten Ergebnisse der Gruppe berechnet.

7. OFDM-Signalausgleichsvorrichtung nach Anspruch 1,
wobei in dem OFDM-Signal, wenn komplexe Symbole eines vorgegebenen Trägers in zeitlicher Reihenfolge angeordnet sind, jedes N-te komplexe Symbol das Pilotsymbol ist,
wobei die Indexberechnungseinheit beinhaltet:
eine Halteuntereinheit, die in Funktion N komplexe Symbole halten kann, die zuletzt von dem vorgegebenen Träger repräsentiert wurden;
eine Berechnungsuntereinheit, die in Funktion eine komplexe Multiplikation eines konjugierten Wertes von einem aus dem folgenden (a) und (b) mit dem anderen durchführen und ein Ergebnis der komplexen Multiplikation normalisieren kann: (a) ein komplexes Symbol, das neu von dem Träger repräsentiert wird und (b) ein ältestes der gehaltenen komplexen Symbole;
eine Ergebnissortierungsuntereinheit, die in Funktion ein Ergebnis der Berechnung in eine von N-Gruppen sortieren kann; und
eine Akkumulierungsuntereinheit, die in Funktion die sortierten Ergebnisse separat für jede Gruppe akkumulieren kann, und
wobei die Indexberechnungseinheit als Index für jede Gruppe einen absoluten Wert der akkumulierten Ergebnisse der Gruppe berechnet.

8. OFDM-Signalausgleichsvorrichtung nach Anspruch 1,
wobei die von dem OFDM-Signal repräsentierten komplexen Symbole von einer vorgegebenen Vielzahl von Trägern übertragen werden,
wenn die komplexen Symbole in einer Symbolperiode in einer Trägerfrequenzreihenfolge angeordnet sind, jedes N-te komplexe Symbol das Pilotsignal ist,
wobei die Indexberechnungseinheit beinhaltet:
eine Halteuntereinheit, die in Funktion N komplexe Symbole halten kann, die in der Trägerfrequenzreihenfolge konsekutiv sind;
eine Berechnungsuntereinheit, die in Funktion (a) jedes aus (i) einem komplexen Symbol, das in dem OFDM-Signal ist und direkt in der Trägerfrequenzreihenfolge auf die gehaltenen komplexen Symbole folgt und (ii) einem komplexen Symbol aus den gehaltenen Symbolen, welches die kleinste Trägerfrequenz aufweist, jeweils mit einem Code multiplizieren kann, der einem Träger entspricht, der das zu multiplizierende komplexe Symbol repräsentiert, wodurch jeweilige komplexe Werte erhalten werden, und (b) eine komplexe Division von einem der komplexen Werte mit dem anderen komplexen Wert durchführen kann;
eine Ergebnissortierungsuntereinheit, die in Funktion ein Ergebnis der Berechnung in eine von N-Gruppen sortieren kann; und
eine Akkumulierungsuntereinheit, die in Funktion sortierte Ergebnisse separat für jede Gruppe akkumulieren kann, und
wobei die Indexberechnungseinheit als Index für jede Gruppe einen absoluten Wert der akkumulierten Ergebnisse der Gruppe berechnet.

9. OFDM-Signalausgleichsvorrichtung nach Anspruch 1,
wobei die von dem OFDM-Signal repräsentierten komplexen Symbole von einer vorgegebenen Vielzahl von Trägern übertragen werden,
wenn die komplexen Symbole in einer Symbolperiode in einer Trägerfrequenzreihenfolge angeordnet sind, jedes N-te komplexe Symbol das Pilotsignal ist,
wobei die Indexberechnungseinheit beinhaltet:
eine Halteuntereinheit, die in Funktion N komplexe Symbole halten kann, die in der Trägerfrequenzreihenfolge konsekutiv sind;
eine Berechnungsuntereinheit, die in Funktion (a) jedes aus (i) einem komplexen Symbol, das in dem OFDM-Signal ist und direkt in der Trägerfrequenzreihenfolge auf die gehaltenen komplexen Symbole folgt und (ii) einem komplexen Symbol aus den gehaltenen Symbolen, welches die kleinste Trägerfrequenz aufweist, jeweils mit einem Code multiplizieren kann, der einem Träger entspricht, der das zu multiplizierende komplexe Symbol repräsentiert, wodurch jeweilige komplexe Werte erhalten werden, und (b) eine komplexe Multiplikation eines konjugierten Wertes von einem der komplexen Werte mit dem anderen komplexen Wert durchführen kann;
eine Ergebnissortierungsuntereinheit, die in Funktion ein Ergebnis der Berechnung in eine von N-Gruppen sortieren kann; und
eine Akkumulierungsuntereinheit, die in Funktion sortierte Ergebnisse separat für jede Gruppe akkumulieren kann, und
wobei die Indexberechnungseinheit als Index für jede Gruppe einen absoluten Wert der akkumulierten Ergebnisse der Gruppe berechnet.

10. OFDM-Signalausgleichsvorrichtung nach Anspruch 1,
wobei die von dem OFDM-Signal repräsentierten komplexen Symbole von einer vorgegebenen Vielzahl von Trägern übertragen werden,
wenn die komplexen Symbole in einer Symbolperiode in einer Trägerfrequenzreihenfolge angeordnet sind, jedes N-te komplexe Symbol das Pilotsignal ist,
wobei die Indexberechnungseinheit beinhaltet:
eine Halteuntereinheit, die in Funktion N komplexe Symbole halten kann, die in der Trägerfrequenzreihenfolge konsekutiv sind;
eine Berechnungsuntereinheit, die in Funktion (a) jedes aus (i) einem komplexen Symbol, das in dem OFDM-Signal ist und direkt in der Trägerfrequenzreihenfolge auf die gehaltenen komplexen Symbole folgt und (ii) einem komplexen Symbol aus den gehaltenen Symbolen, welches die kleinste Trägerfrequenz aufweist, jeweils mit einem Code multiplizieren kann, der einem Träger entspricht, der das zu multiplizierende komplexe Symbol repräsentiert, wodurch jeweilige komplexe Werte erhalten werden, und (b) eine komplexe Multiplikation eines konjugierten Wertes von einem der komplexen Werte mit dem anderen komplexen Wert durchführen und ein Ergebnis der komplexen Multiplikation normalisieren kann;
eine Ergebnissortierungsuntereinheit, die in Funktion ein Ergebnis der Berechnung in eine von N-Gruppen sortieren kann; und
eine Akkumulierungsuntereinheit, die in Funktion sortierte Ergebnisse separat für jede Gruppe akkumulieren kann, und
wobei die Indexberechnungseinheit als Index für jede Gruppe einen absoluten Wert der akkumulierten Ergebnisse der Gruppe berechnet.

11. Terrestrische digitale Rundfunkempfangsvorrichtung, die die OFDM-Signalausgleichsvorrichtung nach Anspruch 1 enthält, wobei die terrestrische digitale Rundfunkempfangsvorrichtung Funktionen zum Empfangen eines Zeitbereichs-OFDM-Signals aufweist, zum Fourier-Umwandeln des empfangenen Signals in ein Frequenzbereichs-OFDM-Signal, zum Ausgleichen des Frequenzbereichs-OFDM-Signals, und zum Wiedergeben von einem oder beidem aus Video und Audio aus dem ausgeglichenen OFDM-Signal,
wobei, wenn die vorgegebenen komplexen Symbole, die von dem Frequenzbereichs-OFDM-Signal repräsentiert werden, in einer vorgegebenen Reihenfolge angeordnet sind, jedes N-te komplexe Symbol ein Pilotsymbol ist, das beim Signalausgleich verwendet wird, und
die OFDM-Signalausgleichsvorrichtung das Frequenzbereichs-OFDM-Signal ausgleicht.

12. OFDM-Signalausgleichsverfahren (Orthogonal Frequency Division Multiplexing) zum Ausgleichen eines Frequenzbereichs-OFDM-Signals unter Verwendung von Pilotsymbolen, wobei vorgegebene komplexe Symbole, die von dem OFDM-Signal repräsentiert werden, in einer vorgegebenen Reihenfolge angeordnet sind, und jedes N-te, wobei 2 ≤ N, komplexe Symbol ein Pilotsymbol ist,
wobei die vorgegebenen komplexen Symbole des Weiteren Synchronisationssymbole umfassen, die eine Frame-Synchronisationstaktung des OFDM-Signals anzeigen, und wobei die Positionen der Pilotsymbole eine vorgegebene relative Beziehung zu den Positionen der Synchronisationssymbole aufweisen, wobei das Verfahren umfasst:
einen Indexberechnungsschritt zum Berechnen eines Index für jede aus N-Gruppen von komplexen Symbolen, wobei jede Gruppe ein anderes aus allen N-ten komplexen Symbolen in der vorgegebenen Reihenfolge enthält, wobei jeder Index eine Korrelation zwischen den komplexen Symbolen in der Gruppe anzeigt;
einen Ausgleichsschritt zum Ausgleichen des OFDM-Signals unter Verwendung der komplexen Symbole, die in der Gruppe enthalten sind, deren berechneter Index am größten ist; und
einen Synchronisationssymbol-Ermittlungsschritt zum Ermitteln der Synchronisationssymbole in dem OFDM-Signal,
wobei
der Ausgleichsschritt vor der Ermittlung der Synchronisationssymbole das OFDM-Signal unter Verwendung der komplexen Symbole ausgleicht, die in der Gruppe enthalten sind, deren berechneter Index am größten ist, und der Ausgleichsschritt nach der Ermittlung der Synchronisationssymbole das OFDM-Signal unter Verwendung der Pilotsymbole ausgleicht, deren Positionen die vorgegebene relative Beziehung zu den Positionen der Synchronisationssymbole aufweisen.

13. OFDM-Signalausgleichsverfahren nach Anspruch 12, des Weiteren umfassend
einen Ausgleichsverhinderungsschritt zum Verhindern, dass der Ausgleichsschritt das OFDM-Signal ausgleicht, wenn alle Indices unterhalb des vorgegebenen Schwellenwerts liegen.

14. OFDM-Signalausgleichsverfahren nach Anspruch 13,
wobei die komplexen Symbole, die von dem OFDM-Signal repräsentiert werden, des Weiteren Identifizierungssymbole beinhalten, die anzeigen, ob Pilotsignale in dem OFDM-Signal vorhanden oder abwesend sind,
wobei das OFDM-Signalausgleichsverfahren des Weiteren einen Identifizierungssymbol-Ermittlungsschritt zum Ermitteln der Identifizierungssymbole in dem OFDM-Signal umfasst, und
wobei der Ausgleichsverhinderungsschritt vor der Ermittlung der Identifizierungssymbole verhindert, dass der Ausgleichsschritt das OFDM-Signal ausgleicht, wenn alle Indices unterhalb des vorgegebenen Schwellenwerts liegen, und wobei der Ausgleichsverhinderungsschritt nach der Ermittlung der Identifizierungssymbole verhindert, dass der Ausgleichsschritt das OFDM-Signal ausgleicht, wenn die Identifizierungssymbole anzeigen, dass die Pilotsymbole abwesend sind.

15. OFDM-Signalausgleichsverfahren nach Anspruch 12,
wobei das OFDM-Signal aus einer Vielzahl von OFDM-Segmenten besteht, umfassend eine Vielzahl von Trägern,
wobei das OFDM-Signalausgleichsverfahren des Weiteren einen Sortierungsschritt für komplexe Symbole zum Sortieren der einzelnen komplexen Symbole in ein Segment umfasst, zu dem ein Träger gehört, der das komplexe Symbol repräsentiert,
wobei der Indexberechnungsschritt einen Index für jedes Segment basierend auf den komplexen Symbolen berechnet, die in das Segment sortiert wurden,
wobei der Ausgleichsschritt die Signale ausgleicht, die von den Trägern repräsentiert werden, die zu den einzelnen Segmenten gehören, basierend auf den komplexen Symbolen in der Gruppe, deren Index am größten ist, wobei jedes Segment separat von anderen Segmenten ausgeglichen wird, und der Ausgleichsverhinderungsschritt verhindert, dass der Ausgleichsschritt Signale ausgleicht, die von Trägern repräsentiert werden, die zu einem Segment gehören, dessen berechneter Index unterhalb des vorgegebenen Schwellenwerts liegt.

16. OFDM-Signalausgleichsverfahren nach Anspruch 12,
wobei in dem OFDM-Signal, wenn komplexe Symbole eines vorgegebenen Trägers in zeitlicher Reihenfolge angeordnet sind, jedes N-te komplexe Symbol das Pilotsymbol ist, wobei der Indexberechnungsschritt beinhaltet:
einen Halteunterschritt zum Halten von N komplexen Symbolen, die zuletzt von dem vorgegebenen Träger repräsentiert wurden;
einen Berechnungsunterschritt zum Durchführen einer komplexen Division von einem aus dem folgenden (a) und (b) mit dem anderen; (a) ein komplexes Symbol, das neu von dem Träger repräsentiert wird und (b) ein ältestes der gehaltenen komplexen Symbole;
einen Ergebnissortierungsschritt zum Sortieren eines Ergebnisses der Berechnung in eine von N-Gruppen; und
einen Akkumulierungsunterschritt zum Akkumulieren der sortierten Ergebnisse separat für jede Gruppe, und
wobei der Indexberechnungsschritt als Index für jede Gruppe einen absoluten Wert der akkumulierten Ergebnisse der Gruppe berechnet.

17. OFDM-Signalausgleichsverfahren nach Anspruch 12,
wobei in dem OFDM-Signal, wenn komplexe Symbole eines vorgegebenen Trägers in zeitlicher Reihenfolge angeordnet sind, jedes N-te komplexe Symbol das Pilotsymbol ist,
wobei der Indexberechnungsschritt beinhaltet:
einen Halteunterschritt zum Halten von N komplexen Symbolen, die zuletzt von dem vorgegebenen Träger repräsentiert wurden;
einen Berechnungsunterschritt zum Durchführen einer komplexen Multiplikation eines konjugierten Wertes von einem aus dem folgenden (a) und (b) mit dem anderen: (a) ein komplexes Symbol, das neu von dem Träger repräsentiert wird und (b) ein ältestes der gehaltenen komplexen Symbole;
einen Ergebnissortierungsschritt zum Sortieren eines Ergebnisses der Berechnung in eine von N-Gruppen; und
einen Akkumulierungsunterschritt zum Akkumulieren der sortierten Ergebnisse separat für jede Gruppe, und
wobei der Indexberechnungsschritt als Index für jede Gruppe einen absoluten Wert der akkumulierten Ergebnisse der Gruppe berechnet.

18. OFDM-Signalausgleichsverfahren nach Anspruch 12,
wobei in dem OFDM-Signal, wenn komplexe Symbole eines vorgegebenen Trägers in zeitlicher Reihenfolge angeordnet sind, jedes N-te komplexe Symbol das Pilotsymbol ist,
wobei der Indexberechnungsschritt beinhaltet:
einen Halteunterschritt zum Halten von N komplexen Symbolen, die zuletzt von dem vorgegebenen Träger repräsentiert wurden;
einen Berechnungsunterschritt zum Durchführen einer komplexen Multiplikation eines konjugierten Wertes von einem aus dem folgenden (a) und (b) mit dem anderen und zum Normalisieren eines Ergebnisses der komplexen Multiplikation: (a) ein komplexes Symbol, das neu von dem Träger repräsentiert wird und (b) ein ältestes der gehaltenen komplexen Symbole;
einen Ergebnissortierungsschritt zum Sortieren eines Ergebnisses der Berechnung in eine von N-Gruppen; und
einen Akkumulierungsunterschritt zum Akkumulieren der sortierten Ergebnisse separat für jede Gruppe, und
wobei der Indexberechnungsschritt als Index für jede Gruppe einen absoluten Wert der akkumulierten Ergebnisse der Gruppe berechnet.

19. OFDM-Signalausgleichsverfahren nach Anspruch 12,
wobei die von dem OFDM-Signal repräsentierten komplexen Symbole von einer vorgegebenen Vielzahl von Trägern übertragen werden,
wenn die komplexen Symbole in einer Symbolperiode in einer Trägerfrequenzreihenfolge angeordnet sind, jedes N-te komplexe Symbol das Pilotsignal ist,
wobei der Indexberechnungsschritt beinhaltet:
einen Halteunterschritt zum Halten von N komplexen Symbolen, die in der Trägerfrequenzreihenfolge konsekutiv sind;
einen Berechnungsschritt zum (a) Multiplizieren von jedem aus (i) einem komplexen Symbol, das in dem OFDM-Signal ist und direkt in der Trägerfrequenzreihenfolge auf die gehaltenen komplexen Symbole folgt und (ii) einem komplexen Symbol aus den gehaltenen Symbolen, welches die kleinste Trägerfrequenz aufweist, jeweils mit einem Code, der einem Träger entspricht, der das zu multiplizierende komplexe Symbol repräsentiert, wodurch jeweilige komplexe Werte erhalten werden, und (b) Durchführen einer komplexen Division von einem der komplexen Werte mit dem anderen komplexen Wert;
einen Ergebnissortierungsschritt zum Sortieren eines Ergebnisses der Berechnung in eine von N-Gruppen; und
einen Akkumulierungsunterschritt zum Akkumulieren der sortierten Ergebnisse separat für jede Gruppe, und
wobei der Indexberechnungsschritt als Index für jede Gruppe einen absoluten Wert der akkumulierten Ergebnisse der Gruppe berechnet.

20. OFDM-Signalausgleichsverfahren nach Anspruch 12,
wobei die von dem OFDM-Signal repräsentierten komplexen Symbole von einer vorgegebenen Vielzahl von Trägern übertragen werden,
wenn die komplexen Symbole in einer Symbolperiode in einer Trägerfrequenzreihenfolge angeordnet sind, jedes N-te komplexe Symbol das Pilotsignal ist,
wobei der Indexberechnungsschritt beinhaltet:
einen Halteunterschritt zum Halten von N komplexen Symbolen, die in der Trägerfrequenzreihenfolge konsekutiv sind;
einen Berechnungsunterschritt zum (a) Multiplizieren von jedem aus (i) einem komplexen Symbol, das in dem OFDM-Signal ist und direkt in der Trägerfrequenzreihenfolge auf die gehaltenen komplexen Symbole folgt und (ii) einem komplexen Symbol aus den gehaltenen Symbolen, welches die kleinste Trägerfrequenz aufweist, jeweils mit einem Code, der einem Träger entspricht, der das zu multiplizierende komplexe Symbol repräsentiert, wodurch jeweilige komplexe Werte erhalten werden, und (b) Durchführen einer komplexen Multiplikation eines konjugierten Wertes von einem der komplexen Werte mit dem anderen komplexen Wert;
einen Ergebnissortierungsschritt zum Sortieren eines Ergebnisses der Berechnung in eine von N-Gruppen; und
einen Akkumulierungsunterschritt zum Akkumulieren der sortierten Ergebnisse separat für jede Gruppe, und
wobei der Indexberechnungsschritt als Index für jede Gruppe einen absoluten Wert der akkumulierten Ergebnisse der Gruppe berechnet.

21. OFDM-Signalausgleichsverfahren nach Anspruch 12,
wobei die von dem OFDM-Signal repräsentierten komplexen Symbole von einer vorgegebenen Vielzahl von Trägern übertragen werden,
wenn die komplexen Symbole in einer Symbolperiode in einer Trägerfrequenzreihenfolge angeordnet sind, jedes N-te komplexe Symbol das Pilotsignal ist,
wobei der Indexberechnungsschritt beinhaltet:
einen Halteunterschritt zum Halten von N komplexen Symbolen, die in der Trägerfrequenzreihenfolge konsekutiv sind;
einen Berechnungsunterschritt zum (a) Multiplizieren von jedem aus (i) einem komplexen Symbol, das in dem OFDM-Signal ist und direkt in der Trägerfrequenzreihenfolge auf die gehaltenen komplexen Symbole folgt und (ii) einem komplexen Symbol aus den gehaltenen Symbolen, welches die kleinste Trägerfrequenz aufweist, jeweils mit einem Code, der einem Träger entspricht, der das zu multiplizierende komplexe Symbol repräsentiert, wodurch jeweilige komplexe Werte erhalten werden, und (b) Durchführen einer komplexen Multiplikation eines konjugierten Wertes von einem der komplexen Werte mit dem anderen komplexen Wert und Normalisieren eines Ergebnisses der komplexen Multiplikation;
einen Ergebnissortierungsschritt zum Sortieren eines Ergebnisses der Berechnung in eine von N-Gruppen; und
einen Akkumulierungsunterschritt zum Akkumulieren der sortierten Ergebnisse separat für jede Gruppe, und
wobei der Indexberechnungsschritt als Index für jede Gruppe einen absoluten Wert der akkumulierten Ergebnisse der Gruppe berechnet.

22. Computerausführbares Programm, das zur Durchführung des Verfahrens nach einem der Ansprüche 12 bis 21 bei Ausführung durch einen Computer eingerichtet ist.

## Revendications

1. Appareil d'égalisation du signal de multiplexage OFDM par répartition orthogonale de la fréquence pour égaliser un signal OFDM de domaine de fréquences en utilisant des symboles pilotes, dans lequel des symboles complexes prédéterminés représentés par le signal OFDM sont agencés dans un ordre prédéterminé, et chaque N^{ième}, avec 2 ≤ N, symbole complexe est un symbole pilote, lesdits symboles complexes prédéterminés comprenant en outre la synchronisation des symboles qui indiquent le cadencement de synchronisation de trame du signal OFDM et dans lequel les positions des symboles pilotes ont une relation relative prédéterminée avec les positions des symboles de synchronisation, ledit appareil comprenant:
une unité de calcul d'indice (53) servant à calculer un indice pour chacun des N groupes de symboles complexes, chaque groupe comprenant un symbole différent de chacun des N^{ièmes} symboles complexes dans l'ordre prédéterminé, chaque indice indiquant une corrélation entre les symboles complexes dans le groupe;
une unité d'égalisation (58) servant à égaliser le signal OFDM en utilisant les symboles complexes inclus dans le groupe dont l'indice calculé est le plus grand; et
une unité de détection de symbole de synchronisation (52) servant à détecter les symboles de synchronisation du signal OFDM, dans lequel, avant la détection des symboles de synchronisation, l'unité d'égalisation égalise le signal OFDM en utilisant les symboles complexes inclus dans le groupe dont l'indice calculé est le plus grand, et, après la détection des symboles de synchronisation, l'unité d'égalisation égalise le signal OFDM à l'aide des symboles complexes dont les positions présentent ladite relation prédéterminée relative par rapport aux positions des symboles de synchronisation.

2. Appareil d'égalisation du signal OFDM selon la revendication 1, comprenant en outre une unité d'interdiction d'égalisation servant à interdire à l'unité d'égalisation d'égaliser le signal OFDM lorsque tous les indices sont inférieurs à une valeur seuil prédéterminée.

3. Appareil d'égalisation du signal OFDM selon la revendication 2,
dans lequel les symboles complexes représentés par le signal OFDM incluent en outre l'identification des symboles qui indiquent la présence ou l'absence des symboles pilotes dans le signal OFDM,
l'appareil d'égalisation du signal OFDM comprend en outre une unité de détection de symbole d'identification servant à détecter les symboles d'identification dans le signal OFDM, et
avant la détection des symboles d'identification, l'unité d'interdiction d'égalisation interdit à l'unité d'égalisation d'égaliser le signal OFDM lorsque tous les indices sont inférieurs à la valeur seuil prédéterminée et, après la détection des symboles d'identification, l'unité d'interdiction d'égalisation interdit à l'unité d'égalisation d'égaliser le signal OFDM si les symboles d'identification indiquent l'absence des symboles pilotes.

4. Appareil d'égalisation du signal OFDM selon la revendication 2,
dans lequel le signal OFDM est composé d'une pluralité de segments OFDM comprenant une pluralité de porteuses,
l'appareil d'égalisation du signal comprend en outre une unité de tri de symboles complexes servant à trier chaque symbole complexe dans un segment auquel appartient une porteuse représentant le symbole complexe,
l'unité de calcul d'indice calcule un indice pour chaque segment, en fonction des symboles complexes triés dans le segment,
l'unité d'égalisation égalise les signaux représentés par les porteuses appartenant à chaque segment, en fonction des symboles complexes du groupe dont l'indice est le plus grand, chaque segment étant égalisé séparément des autres segments et l'unité d'interdiction d'égalisation interdit à l'unité d'égalisation d'égaliser les signaux représentés par des porteuses appartenant à un segment dont l'indice calculé est inférieur à la valeur seuil prédéterminée.

5. Appareil d'égalisation du signal OFDM selon la revendication 1,
dans lequel, dans le signal OFDM, si des symboles complexes d'une porteuse prédéterminée sont disposés dans l'ordre temporel, chaque N^{ième} symbole complexe est le symbole pilote,
l'unité de calcul d'indice inclut:
une sous-unité de stockage servant à stocker les N symboles complexes les plus récemment représentés par la porteuse prédéterminée;
une sous-unité de calcul servant à effectuer une division complexe de l'un des éléments suivants (a) et (b) avec l'autre: (a) un symbole complexe récemment représenté par la porteuse et (b) le plus ancien des symboles complexes stockés;
une sous-unité de tri des résultats servant à trier un résultat du calcul dans l'une des N groupes; et
une sous-unité d'accumulation servant à accumuler les résultats triés séparément pour chaque groupe, et
l'unité de calcul d'indice calcule, comme indice de chaque groupe, une valeur absolue des résultats accumulés du groupe.

6. Appareil d'égalisation du signal OFDM selon la revendication 1,
dans lequel, dans le signal OFDM, si des symboles complexes d'une porteuse prédéterminée sont disposés dans l'ordre temporel, chaque N^{ième} symbole complexe est le symbole pilote,
l'unité de calcul d'indice inclut:
une sous-unité de stockage servant à stocker les N symboles complexes les plus récemment représentés par la porteuse prédéterminée;
une sous-unité de calcul servant à effectuer une multiplication complexe d'une valeur conjuguée de l'un des éléments suivants (a) et (b) avec l'autre: (a) un symbole complexe récemment représenté par la porteuse et (b) le plus ancien des symboles complexes stockés;
une sous-unité de tri des résultats servant à trier un résultat du calcul dans l'un des N groupes; et
une sous-unité d'accumulation servant à accumuler les résultats triés séparément pour chaque groupe, et
l'unité de calcul d'indice calcule, comme indice de chaque groupe, une valeur absolue des résultats accumulés du groupe.

7. Appareil d'égalisation du signal OFDM selon la revendication 1,
dans lequel, dans le signal OFDM, si des symboles complexes d'une porteuse prédéterminée sont disposés dans l'ordre temporel, chaque N^{ième} symbole complexe est le symbole pilote,
l'unité de calcul d'indice inclut:
une sous-unité de stockage servant à stocker les N symboles complexes les plus récemment représentés par la porteuse prédéterminée;
une sous-unité de calcul servant à effectuer une multiplication complexe d'une valeur conjuguée de l'un des éléments suivants (a) et (b) avec l'autre, et
normaliser un résultat de la multiplication complexe: (a) un symbole complexe récemment représenté par la porteuse et (b) le plus ancien des symboles complexes stockés;
une sous-unité de tri des résultats servant à trier un résultat du calcul dans l'un des N groupes; et
une sous-unité d'accumulation servant à accumuler les résultats triés séparément pour chaque groupe, et
l'unité de calcul d'indice calcule, comme indice de chaque groupe, une valeur absolue des résultats accumulés du groupe.

8. Appareil d'égalisation du signal OFDM selon la revendication 1,
dans lequel les symboles complexes représentés par le signal OFDM sont transmis par une pluralité prédéterminée de porteuses,
si les symboles complexes dans une période de symbole sont disposés dans un ordre de fréquences porteuses, chaque N^{ième} symbole complexe est le signal pilote,
l'unité de calcul d'indice inclut:
une sous-unité de stockage servant à stocker les N symboles complexes qui sont consécutifs dans l'ordre des fréquences porteuses;
une sous-unité de calcul servant à (a) multiplier chacun des éléments suivants (i) un symbole complexe qui est dans le signal OFDM et est directement successif dans l'ordre des fréquences porteuses par rapport aux symboles complexes stockés et (ii) un symbole complexe parmi les symboles complexes stockés qui présente la plus petite fréquence porteuse, respectivement, avec un code qui correspond à une porteuse représentant le symbole complexe à multiplier, en obtenant ainsi des valeurs complexes respectives, et (b) réaliser la division complexe de l'une des valeurs complexes avec l'autre valeur complexe;
une sous-unité de tri des résultats servant à trier un résultat du calcul dans l'un des N groupes; et
une sous-unité d'accumulation servant à accumuler les résultats triés séparément pour chaque groupe, et
l'unité de calcul d'indice calcule, comme indice de chaque groupe, une valeur absolue des résultats accumulés du groupe.

9. Appareil d'égalisation du signal OFDM selon la revendication 1,
dans lequel les symboles complexes représentés par le signal OFDM sont transmis par une pluralité prédéterminée de porteuses,
si les symboles complexes dans une période de symbole sont disposés dans un ordre des fréquences porteuses, chaque N^{ième} symbole complexe est le signal pilote,
l'unité de calcul d'indice inclut:
une sous-unité de stockage servant à stocker les N symboles complexes qui sont consécutifs dans l'ordre des fréquences porteuses;
une sous-unité de calcul servant à (a) multiplier chacun des éléments suivants (i) un symbole complexe qui est dans le signal OFDM et est directement successif dans l'ordre des fréquences porteuses par rapport aux symboles complexes stockés et (ii) un symbole complexe parmi les symboles complexes stockés qui présente la plus petite fréquence porteuse, respectivement, avec un code qui correspond à une porteuse représentant le symbole complexe à multiplier, en obtenant ainsi des valeurs complexes respectives, et (b) réaliser la multiplication complexe d'une valeur conjuguée de l'une des valeurs complexes avec l'autre valeur complexe;
une sous-unité de tri des résultats servant à trier un résultat du calcul dans l'un des N groupes; et
une sous-unité d'accumulation servant à accumuler les résultats triés séparément pour chaque groupe, et
l'unité de calcul d'indice calcule, comme indice de chaque groupe, une valeur absolue des résultats accumulés du groupe.

10. Appareil d'égalisation du signal OFDM selon la revendication 1,
dans lequel les symboles complexes représentés par le signal OFDM sont transmis par une pluralité prédéterminée de porteuses,
si les symboles complexes dans une période de symbole sont disposés dans un ordre des fréquences porteuses, chaque N^{ième} symbole complexe est le signal pilote,
l'unité de calcul d'indice inclut:
une sous-unité de stockage servant à stocker les N symboles complexes qui sont consécutifs dans l'ordre des fréquences porteuses;
une sous-unité de calcul servant à (a) multiplier chacun des éléments suivants (i) un symbole complexe qui est dans le signal OFDM et est directement successif dans l'ordre des fréquences porteuses par rapport aux symboles complexes stockés et (ii) un symbole complexe parmi les symboles complexes stockés qui présente la plus petite fréquence porteuse, respectivement, avec un code qui correspond à une porteuse représentant le symbole complexe à multiplier, en obtenant ainsi des valeurs complexes respectives, et (b) réaliser la multiplication complexe d'une valeur conjuguée de l'une des valeurs complexes avec l'autre valeur complexe, et normaliser un résultat de la multiplication complexe;
une sous-unité de tri des résultats servant à trier un résultat du calcul dans l'un des N groupes; et
une sous-unité d'accumulation servant à accumuler les résultats triés séparément pour chaque groupe, et
l'unité de calcul d'indice calcule, comme indice de chaque groupe, une valeur absolue des résultats accumulés du groupe.

11. Appareil de réception de diffusion numérique terrestre comprenant l'appareil d'égalisation du signal OFDM selon la revendication 1, dans lequel ledit appareil de réception de diffusion numérique terrestre remplit des fonctions de réception d'un signal OFDM de domaine temporel, avec conversion de Fourier du signal reçu en un signal OFDM de domaine de fréquences, égalisation du signal OFDM du domaine de fréquences et lecture d'un signal vidéo ou/et d'un signal audio à partir du signal OFDM égalisé,
dans lequel si les symboles complexes prédéterminés représentés par le signal OFDM de domaine de fréquences sont agencés dans un ordre prédéterminé, chaque N^{ième} symbole complexe est un symbole pilote utilisé pour l'égalisation du signal, et
l'appareil d'égalisation du signal OFDM égalise le signal OFDM de domaine de fréquences.

12. Procédé d'égalisation du signal de multiplexage OFDM par répartition orthogonale de la fréquence pour égaliser un signal OFDM de domaine de fréquences en utilisant des symboles pilotes, dans lequel des symboles complexes prédéterminés représentés par le signal OFDM sont agencés dans un ordre prédéterminé, et chaque N^{ième}, avec 2 ≤ N, symbole complexe est un symbole pilote, lesdits symboles complexes prédéterminés comprenant en outre la synchronisation des symboles qui indiquent le cadencement de synchronisation de trame du signal OFDM et dans lequel les positions des symboles pilotes ont une relation relative prédéterminée avec les positions des symboles de synchronisation, ledit procédé comprenant:
une étape de calcul d'indice consistant à calculer un indice pour chacun des N groupes de symboles complexes, chaque groupe comprenant un symbole différent de chacun des N^{ièmes} symboles complexes dans l'ordre prédéterminé, chaque indice indiquant une corrélation entre les symboles complexes dans le groupe;
une étape d'égalisation servant à égaliser le signal OFDM en utilisant les symboles complexes inclus dans le groupe dont l'indice calculé est le plus grand; et
une étape de détection de symbole de synchronisation consistant à détecter les symboles de synchronisation dans le signal OFDM,
dans lequel, avant la détection des symboles de synchronisation, l'étape d'égalisation égalise le signal OFDM en utilisant les symboles complexes inclus dans le groupe dont l'indice calculé est le plus grand, et, après la détection des symboles de synchronisation, l'unité d'égalisation égalise le signal OFDM à l'aide des symboles complexes dont les positions présentent ladite relation prédéterminée relative par rapport aux positions des symboles de synchronisation.

13. Procédé d'égalisation du signal OFDM selon la revendication 12, comprenant en outre
une étape d'interdiction d'égalisation servant à interdire l'unité d'égalisation d'égaliser le signal OFDM lorsque tous les indices sont inférieurs à une valeur seuil prédéterminée.

14. Procédé d'égalisation du signal OFDM selon la revendication 13,
dans lequel les symboles complexes représentés par le signal OFDM incluent en outre l'identification des symboles qui indiquent la présence ou l'absence des symboles pilotes dans le signal OFDM,
le procédé d'égalisation de signal OFDM comprend en outre une unité de détection de symbole d'identification servant à détecter les symboles d'identification dans le signal OFDM, et
avant la détection des symboles d'identification, l'étape d'interdiction d'égalisation interdit à l'étape d'égalisation d'égaliser le signal OFDM lorsque tous les indices sont inférieurs à la valeur seuil prédéterminée et, après la détection des symboles d'identification, l'étape d'interdiction d'égalisation interdit à l'unité d'égalisation d'égaliser le signal OFDM si les symboles d'identification indiquent l'absence des symboles pilotes.

15. Procédé d'égalisation du signal OFDM selon la revendication 12,
dans lequel le signal OFDM est composé d'une pluralité de segments OFDM comprenant une pluralité de porteuses,
le procédé d'égalisation du signal OFDM comprend en outre une unité de tri de symboles complexes servant à trier chaque symbole complexe dans un segment auquel appartient une porteuse représentant le symbole complexe,
l'étape de calcul d'indice calcule un indice pour chaque segment, en fonction des symboles complexes triés dans le segment,
l'étape d'égalisation égalise les signaux représentés par les porteuses appartenant à chaque segment, en fonction des symboles complexes du groupe dont l'indice est le plus grand, chaque segment étant égalisé séparément des autres segments et l'étape d'interdiction d'égalisation interdit à l'étape d'égalisation d'égaliser les signaux représentés par des porteuses appartenant à un segment dont l'indice calculé est inférieur à la valeur seuil prédéterminée.

16. Procédé d'égalisation du signal OFDM selon la revendication 12,
dans lequel, dans le signal OFDM, si des symboles complexes d'une porteuse prédéterminée sont disposés dans l'ordre temporel, chaque N^{ième} symbole complexe est le symbole pilote,
l'étape de calcul d'indice inclut:
une sous-étape de stockage consistant à stocker les N symboles complexes les plus récemment représentés par la porteuse prédéterminée;
une sous-étape de calcul consistant à effectuer une division complexe de l'un des éléments suivants (a) et (b) avec l'autre; (a) un symbole complexe récemment représenté par la porteuse et (b) le plus ancien des symboles complexes stockés;
une sous-étape de tri des résultats consistant à trier un résultat du calcul dans l'un des N groupes; et
une sous-étape d'accumulation consistant à accumuler les résultats triés séparément pour chaque groupe, et
l'étape de calcul d'indice calcule, comme indice de chaque groupe, une valeur absolue des résultats accumulés du groupe.

17. Procédé d'égalisation du signal OFDM selon la revendication 12,
dans lequel, dans le signal OFDM, si des symboles complexes d'une porteuse prédéterminée sont disposés dans l'ordre temporel, chaque N^{ième} symbole complexe est le symbole pilote,
l'étape de calcul d'indice inclut:
une sous-étape de stockage consistant à stocker les N symboles complexes les plus récemment représentés par la porteuse prédéterminée;
une sous-étape de calcul consistant à effectuer une multiplication complexe d'une valeur conjuguée de l'un des éléments suivants (a) et (b) avec l'autre: (a) un symbole complexe récemment représenté par la porteuse et (b) le plus ancien des symboles complexes stockés;
une sous-étape de tri des résultats consistant à trier un résultat du calcul dans l'un des N groupes; et
une sous-étape d'accumulation consistant à accumuler les résultats triés séparément pour chaque groupe, et
l'étape de calcul d'indice calcule, comme indice de chaque groupe, une valeur absolue des résultats accumulés du groupe.

18. Procédé d'égalisation du signal OFDM selon la revendication 12,
dans lequel, dans le signal OFDM, si des symboles complexes d'une porteuse prédéterminée sont disposés dans l'ordre temporel, chaque N^{ième} symbole complexe est le symbole pilote,
l'étape de calcul d'indice inclut:
une sous-unité de stockage servant à stocker les N symboles complexes les plus récemment représentés par la porteuse prédéterminée;
une sous-étape de calcul consistant à effectuer une multiplication complexe d'une valeur conjuguée de l'un des éléments suivants (a) et (b) avec l'autre, et à normaliser un résultat de la multiplication complexe: (a) un symbole complexe nouvellement représenté par la porteuse et (b) le plus ancien des symboles complexes stockés;
une sous-étape de tri des résultats consistant à trier un résultat du calcul dans l'un des N groupes; et
une sous-étape d'accumulation consistant à accumuler les résultats triés séparément pour chaque groupe, et
l'étape de calcul d'indice calcule, comme indice de chaque groupe, une valeur absolue des résultats accumulés du groupe.

19. Procédé d'égalisation du signal OFDM selon la revendication 12,
dans lequel les symboles complexes représentés par le signal OFDM sont transmis par une pluralité prédéterminée de porteuses,
si les symboles complexes dans une période de symbole sont disposés dans un ordre des fréquences porteuses, chaque N^{ième} symbole complexe est le signal pilote,
l'étape de calcul d'indice inclut:
une sous-étape de stockage consistant à stocker les N symboles complexes qui sont consécutifs dans l'ordre des fréquences porteuses;
une sous-étape de calcul consistant à (a) multiplier chacun des éléments suivants (i) un symbole complexe qui est dans le signal OFDM et est directement successif dans l'ordre des fréquences porteuses par rapport aux symboles complexes stockés et (ii) un symbole complexe parmi les symboles complexes stockés qui présente la plus petite fréquence porteuse, respectivement, avec un code qui correspond à une porteuse représentant le symbole complexe à multiplier, en obtenant ainsi des valeurs complexes respectives, et (b) réaliser la division complexe de l'une des valeurs complexes avec l'autre valeur complexe;
une sous-étape de tri des résultats consistant à trier un résultat du calcul dans l'un des N groupes; et
une sous-étape d'accumulation consistant à accumuler les résultats triés séparément pour chaque groupe, et
l'étape de calcul d'indice calcule, comme indice de chaque groupe, une valeur absolue des résultats accumulés du groupe.

20. Procédé d'égalisation du signal OFDM selon la revendication 12,
dans lequel les symboles complexes représentés par le signal OFDM sont transmis par une pluralité prédéterminée de porteuses,
si les symboles complexes dans une période de symbole sont disposés dans un ordre des fréquences porteuses, chaque N^{ième} symbole complexe est le signal pilote,
l'étape de calcul d'indice inclut:
une sous-étape de stockage consistant à stocker les N symboles complexes qui sont consécutifs dans l'ordre des fréquences porteuses;
une sous-étape de calcul consistant à (a) multiplier chacun des éléments suivants (i) un symbole complexe qui est dans le signal OFDM et est directement successif dans l'ordre des fréquences porteuses par rapport aux symboles complexes stockés et (ii) un symbole complexe parmi les symboles complexes stockés qui présente la plus petite fréquence porteuse, respectivement, avec un code qui correspond à une porteuse représentant le symbole complexe à multiplier, en obtenant ainsi des valeurs complexes respectives, et (b) réaliser la multiplication complexe d'une valeur conjuguée de l'une des valeurs complexes avec l'autre valeur complexe;
une sous-étape de tri des résultats consistant à trier un résultat du calcul dans l'un des N groupes; et
une sous-étape d'accumulation consistant à accumuler les résultats triés séparément pour chaque groupe, et
l'étape de calcul d'indice calcule, comme indice de chaque groupe, une valeur absolue des résultats accumulés du groupe.

21. Procédé d'égalisation du signal OFDM selon la revendication 12,
dans lequel les symboles complexes représentés par le signal OFDM sont transmis par une pluralité prédéterminée de porteuses,
si les symboles complexes dans une période de symbole sont disposés dans un ordre des fréquences porteuses, chaque N^{ième} symbole complexe est le signal pilote,
l'étape de calcul d'indice inclut:
une sous-étape de stockage consistant à stocker les N symboles complexes qui sont consécutifs dans l'ordre des fréquences porteuses;
une sous-étape de calcul consistant à (a) multiplier chacun des éléments suivants (i) un symbole complexe qui est dans le signal OFDM et est directement successif dans l'ordre des fréquences porteuses par rapport aux symboles complexes stockés et (ii) un symbole complexe parmi les symboles complexes stockés qui présente la plus petite fréquence porteuse, respectivement, avec un code qui correspond à une porteuse représentant le symbole complexe à multiplier, en obtenant ainsi des valeurs complexes respectives, et (b) réaliser la multiplication complexe d'une valeur conjuguée de l'une des valeurs complexes avec l'autre valeur complexe, et normaliser un résultat de la multiplication complexe;
une sous-étape de tri des résultats consistant à trier un résultat du calcul dans l'un des N groupes; et
une sous-étape d'accumulation consistant à accumuler les résultats triés séparément pour chaque groupe, et
l'étape de calcul d'indice calcule, comme indice de chaque groupe, une valeur absolue des résultats accumulés du groupe.

22. Programme exécutable par ordinateur prévu pour réaliser le procédé selon l'une quelconque des revendications 12 à 21, en cas de réalisation par un ordinateur.
